# EUROPEAN PATENT SPECIFICATION

(11) **EP 2 574 782 B1**
(45) Date of publication and mention of the grant of the patent: **29.11.2017**
(21) Application number: 12186039.9
(22) Date of filing: 26.09.2012
(51) Int. Cl.: F03D 7/02, F03D 15/00

(54) **Driving device for wind turbine**
Antriebsvorrichtung für Windkraftanlagen
Dispositif d'entraînement pour éoliennes

(30) Priority: 27.09.2011 JP 2011211360; 21.09.2012 JP 2012207859
(43) Date of publication of application: 03.04.2013
(73) Proprietor: Nabtesco Corporation, Tokyo 102-0093 (JP)
(72) Inventor: Kodama, Haruo, Gifu, 503-2121 (JP); Hosoda, Shigeru, Gifu, 503-2121 (JP); Yokoyama, Katsuhiko, Gifu, 503-2121 (JP)
(74) Representative: Isarpatent

(56) References cited:
- EP-A1- 2 330 297
- EP-A2- 1 775 465
- US-A1- 2009 064 810
- US-A1- 2011 027 006

## Description

### BACKGROUND OF THE INVENTION

### Field of the Invention

The present invention relates to a driving device for a wind turbine that is installed in a wind turbine and drives one structure to rotate relative to another structure in a movable portion of the wind turbine.

### Description of Related Art

Wind turbines that have conventionally been used as wind power generators include those that are each provided with a nacelle that is rotatably installed on the top portion of a tower and in which electricity generators and so on are disposed, and blades that are rotatably installed on a hub (main shaft portion) provided on the nacelle. In such a wind turbine, yaw driving devices, pitch driving devices, or the like are installed as driving devices for a wind turbine that drive one structure to rotate relative to another structure in a movable portion of the wind turbine. The yaw driving devices are configured to drive the nacelle, which is the one structure, to rotate relative to the tower, which is the other structure, thus allowing the nacelle to turn in accordance with the wind direction. The pitch driving devices are configured to drive shaft portions of the blades, each of which is the one structure, to rotate relative to the hub on the nacelle side, which is the other structure, thus enabling control of the pitch angles of the blades.

JP 2001-289149A discloses a driving device for a wind turbine serving as a yaw driving device that includes electric motors and pinions attached to output shafts of the electric motors and outputting rotational driving forces and that rotationally drives the nacelle by causing the pinions to mesh with a ring gear fixed to the top portion of the tower of the wind turbine. JP 2001-289149A also discloses a braking mechanism for stopping the output shafts of the respective electric motors of two driving devices for a wind turbine by simultaneously driving these electric motors in opposite rotation directions.

Also, the inventors of the present invention have devised a nacelle rotating mechanism that is provided with a plurality of yaw driving devices and for rotating the nacelle relative to the tower of a wind turbine as disclosed in International Publication WO/2010/047064.

EP 1 775 465 A2 describes a device for driving a first part of a wind energy turbine with respect to a second part of the wind energy turbine. The device comprises a driving element and a slip coupling, wherein the slip coupling is adjusted to slip if a torque acting on the slip coupling due to a movement force acting on the driving element exceeds a predetermined maximum torque.

### SUMMARY OF THE INVENTION

In the case of using the driving device for a wind turbine disclosed in JP 2001-289149A, a rotational operation of the nacelle is caused by activation of a plurality of such driving devices for a wind turbine that are installed. During operation of the braking mechanism, the output shafts of the electric motors of the driving devices for a wind turbine are stopped. In the case where external forces caused by the wind act on the nacelle of the wind turbine (when external forces act on the one structure in a movable portion of the wind turbine), if the braking mechanism is in the operating state, the forces will act on the driving devices for a wind turbine in the state in which the output shafts of their electric motors are stopped. If the nacelle is being rotated when external forces act on the nacelle, forces in the direction opposite to the direction in which the nacelle is rotationally driven may act on the driving devices for a wind turbine. At this time, if there is variation in the state of meshing engagement between the pinions fixed to the output shafts of the electric motors and the corresponding ring gears, a situation tends to arise in which the aforementioned external forces intensively act on only one of the driving devices for a wind turbine. With the driving device for a wind turbine disclosed in JP 2001-289149A, if external forces intensively act on only one of the driving devices for a wind turbine, excessive external forces will act on that driving device for a wind turbine, which raises the possibility that the driving device for a wind turbine may be broken due to the occurrence of damage thereto, such as that makes continuous use of the driving device difficult and requires replacement.

There is also another possibility that the output shaft of the electric motor of one driving device for a wind turbine may be locked due to some sort of problem or that abnormality in the control system or the like may inhibit disengagement of a brake on only one of the driving devices for a wind turbine. If the output shaft of an electric motor is locked in this way, excessive external forces will act on one of the driving devices for a wind turbine by the force of the other driving devices for a wind turbine, causing such damage that makes continuous use of the driving device difficult and requires replacement. If one of the driving devices for a wind turbine is broken and its pinion cannot be rotated by even excessive external forces, this means a loss of the yaw drive function of the wind power generator and accordingly a loss of the function of generating electric power. While the case where the driving devices for a wind turbine are provided as yaw driving devices has been described above, the same problem will arise with driving devices for a wind turbine that are provided as pitch driving devices that drive the shaft portions of the blades to rotate relative to the hub on the nacelle side.

From the viewpoint of providing a mechanism that is capable of solving the aforementioned problems and for preventing breakage in a driving device for a wind turbine, the inventors of the present invention have devised a nacelle rotating mechanism disclosed in International Publication WO/2010/047064. The nacelle rotating mechanism disclosed in International Publication WO/2010/047064 is provided with a mechanism that is capable of, even if excessive external forces act on one of a plurality of driving devices for a wind turbine that are installed, preventing breakage in that driving device for a wind turbine. The mechanism for preventing breakage in a driving device for a wind turbine in the aforementioned nacelle rotating mechanism is provided in a driving force transmission path that is a path through which a driving force is transmitted from the output shafts of the electric motors to the pinions, and is configured as a cutaway portion serving as a disconnection mechanism for disconnecting the driving force transmission path under the action of a torque of a predetermined magnitude or more.

In order to improve the output torque and downsize the configuration, it is desirable, as in the yaw driving device disclosed in International Publication WO/2010/047064, that a speed reduction portion that slows down and transmits a rotational driving force be provided between the output shaft of an electric motor and the pinion. However, if the aforementioned cutaway portion serving as a mechanism for preventing breakage in a driving device for a wind turbine is provided in the driving force transmission path, there is a possibility that when the cutaway portion serving as the disconnection mechanism is activated and has disconnected the path, broken pieces generated by the disconnection may directly enter and intrude into the speed reduction portion. These broken pieces may make scratches on slide faces of gears and on rolling faces of bearings in the speed reduction portion, resulting in deterioration in durability There is also another possibility that speed reduction portion may catch these broken pieces and thereby stop rotating, resulting in a loss of the yaw drive function and breakage in the ring gear. For this reason, in the case of replacing this cutaway portion after the activation of the cutaway portion, the operation of checking whether or not there is an intrusion of broken pieces into the speed reduction portion is necessary, which increases the burden on the replacement operation. Accordingly, it is desirable, in the case of providing a mechanism for preventing breakage in a driving device for a wind turbine, to realize a structure that is capable of reducing troublesome maintenance operations such as the operation of checking whether or not there is an intrusion of broken pieces into the speed reduction portion and the operation of replacing the cutaway portion.

In view of the foregoing circumstances, it is an object of the present invention to provide a driving device for a wind turbine that is configured such that even if excessive external forces act on one of a plurality of driving devices for a wind turbine that are installed and used, it is possible to prevent breakage in that driving device and to reduce troublesome maintenance operations associated with the mechanism for preventing breakage.

In order to achieve the above-described object, a driving device for a wind turbine according to a first aspect of the present invention includes the features of claim 1, according to a second aspect includes the features of claim 4 and according to a third aspect includes the features of claim 5.

In the case of installing and using a plurality of driving devices for a wind turbine in the movable portion of the wind turbine, if external forces act on the second structure with there being variation in the state of meshing engagement between the pinions and the corresponding ring gears during the rotation of the second structure relative to the first structure or during a halt in rotation, the external forces will intensively act on one of the driving devices for a wind turbine. In this case, with the driving device for a wind turbine according to the present invention, when a torque of a predetermined magnitude or more acts on the driving force transmission path, the operating state of the operation switching mechanism switches from the linked state to the unlinked/released state. In the case of installing and using a plurality of driving devices for a wind turbine, any of the driving devices for a wind turbine may have an electric motor whose output shaft is locked due to the occurrence of a problem or the like. In this case, according to the present invention, in the driving device for a wind turbine in which the output shaft of the electric motor has been locked, a torque of a predetermined magnitude or more will act on the driving force transmission path by the forces of the other driving devices for the wind turbine, and accordingly the operating state of the operation switching mechanism switches from the linked state to the unlinked/released state. In this way, according to the present invention, the driving device for a wind turbine under the action of excessive external forces will enter a state in which the operation switching mechanism switches from the linked state to the unlinked/released state and accordingly the driving force transmission path is unlinked so as to transmit no force. With the place that is disconnected by the operation switching mechanism as a boundary, a portion on the pinion side that is coupled to the pinion is driven so as to run at idle (turns free) relative to the portion on the electric motor side. This prevents the occurrence of damage to the driving device for a wind turbine, thus preventing breakage in the driving device for a wind turbine.

In the driving device for a wind turbine according to the present invention, the operation switching mechanism that serves as a mechanism for preventing breakage in the driving device for a wind turbine is provided as a mechanism that switches its operating state between the linked state and the unlinked/released state depending on the magnitude of the torque acting thereon. Thus, unlike the configuration as disclosed in International Publication WO/2010/047064 in which a cutaway portion is provided as a mechanism for preventing breakage in a driving device for a wind turbine, broken pieces or the like will not be produced at the place where the driving force transmission path is disconnected. Thus, there are no such cases where broken pieces obtained by disconnection enter the speed reduction portion and make scratches on slide faces of gears, thus causing deterioration in durability, and there is no necessity for the operation itself of checking whether or not there is an intrusion of broken pieces into the speed reduction portion. Furthermore, in the driving device for a wind turbine of the present invention, after the operating state has switched to the unlinked/released state and when the magnitude of the acting torque drops below the predetermined magnitude, the operation switching mechanism can return to the linked state. Thus, unlike the configuration provided with a cutaway portion as disclosed in International Publication WO/2010/047064, there is no necessity for the operation of replacing the mechanism for preventing breakage in a driving device for a wind turbine. Accordingly, the number of troublesome maintenance operations such as checking the inside of the speed reduction portion and replacing part of the mechanism can also be reduced.

It is thus possible, according to this aspect of the present invention, to provide a driving device for a wind turbine that is configured such that even if excessive external forces act on one of a plurality of driving devices for a wind turbine that are installed and used, it is possible to prevent breakage in that driving device and to reduce troublesome maintenance operations associated with the mechanism for preventing breakage.

The driving device for a wind turbine is configured such that at least part of the speed reduction portion includes a first speed reduction portion and a second speed reduction portion, the first speed reduction portion being coupled to the input shaft and slowing down and transmitting the rotational driving force that is input to the input shaft, and the second speed reduction portion being coupled to the output portion, further slowing down and transmitting the rotational driving force transmitted from the first speed reduction portion, and outputting the rotational driving force to the output portion, and at least part of the operation switching mechanism is provided in at least one of the output shaft, the input shaft, and the first speed reduction portion that are in the driving force transmission path.

According to this aspect of the invention, since the operation switching mechanism is provided in at least one of the output shaft of the electric motor, the input shaft, and the first speed reduction portion, the operation switching mechanism is provided on the input side where a low torque acts on the driving force transmission path. Thus, a small operation switching mechanism can be realized with ease.

The driving device for a wind turbine according to the first and according to the third aspect of the present invention is configured such that the first speed reduction portion is provided as a planet gear speed reducer that includes a sun gear, a plurality of planet gears that mesh with the sun gear and revolve around the sun gear while rotating on axes of the planet gears, and a planet carrier that supports the planet gears such that the planet gears are able to freely rotate on the axes of the planet gears and to freely revolve around the sun gear, and at least part of the operation switching mechanism is provided in the first speed reduction portion.

According to these aspects of the invention, since the operation switching mechanism is provided in the first speed reduction portion that is provided as a planet gear speed reducer, a small operation switching mechanism can be realized with ease on the input side where a low torque acts on the speed reduction portion. Because the first speed reduction portion is provided as a planet gear speed reducer that includes, for example, the sun gear, the planet gears, and the planet carrier, these constituent elements can be compactly disposed in the direction of a plane perpendicular to the axial direction of the input shaft. Accordingly, the operation switching mechanism can be provided through efficient use of an area that is located in the vicinity of the input shaft and extends in the direction of a plane perpendicular to the axial direction of the input shaft, and the constituent elements disposed compactly in that area. It is thus possible to increase the degree of freedom in the arrangement and structure of the operation switching mechanism in the input-side area of the speed reduction portion.

The driving device for a wind turbine according to the first and the second aspect of the present invention is configured such that the operation switching mechanism includes a planetary ring gear and a holding unit, the planetary ring gear being provided in the first speed reduction portion and disposed around the planet gears so as to mesh with the planet gears, and the holding unit rotatably holding the planetary ring gear in a state in which axial movement of the planetary ring gear relative to a body is restricted, the body housing the input shaft and the speed reduction portion, and when a torque of a predetermined magnitude or more acts between the holding unit and the planetary ring gear, the operating state switches from the linked state in which the rotation of the planetary ring gear relative to the holding unit is restricted, to the unlinked/released state in which the planetary ring gear rotates relative to the holding unit.

According to these aspects of the invention, since the operation switching mechanism includes the planetary ring gear disposed around the planet gears, and the holding unit that rotatably holds the planetary ring gear, the operation switching mechanism can be installed through effective use of an annular area around the planet gear speed reducer. Accordingly, the operation switching mechanism with a compact structure can be incorporated into the first speed reduction portion provided as a planet gear speed reducer.

The driving device for a wind turbine according to the first aspect of the present invention is configured such that the holding unit includes a retaining ring member that is fixed to the body, has a ring shape, and holds the planetary ring gear along an outer circumference of the planetary ring gear, a first engagement pin that is slidably disposed in the retaining ring member and has a front end portion that can protrude through the retaining ring member toward the planetary ring gear so that the first engagement pin is engaged with a first recessed portion that is formed in the outer circumference of the planetary ring gear, and a first spring member that is installed in at least either of the body and the retaining ring member and biases the first engagement pin in a direction to cause the first engagement pin to protrude through the retaining ring member toward the planetary ring gear.

According to this aspect of the invention, the structure that switches its operating state between the linked state and the unlinked/released state depending on the magnitude of the torque acting between the holding unit and the planetary ring gear can be realized with a simple structure constituted by the retaining ring member, the first engagement pin, and the first spring member.

A driving device for a wind turbine according to a fourth aspect of the present invention is configured such that the driving device for a wind turbine of the first aspect further includes a displacement sensor that detects displacement of the first engagement pin relative to the retaining ring member, and a first controller that, when the displacement sensor detects that the first engagement pin is moved to a position at which the first engagement pin is disengaged from the first recessed portion, controls the braking mechanism such that the breaking mechanism cancels the operation of stopping the output shaft, or controls the electric motor such that an output torque of the electric motor is reduced.

According to this aspect of the invention, when the operating state of the operation switching mechanism switches to the unlinked/released state, i.e., when the first engagement pin is disengaged and the planetary ring gear becomes rotatable relative to the retaining ring member, the operation of stopping the output shaft by the braking mechanism is cancelled, or the output torque of the electric motor is reduced. This suppresses an increase in the rotation speed of the planetary ring gear relative to the retaining ring member and reduces the occurrence of wear in the first engagement pin and the outer circumference of and the planetary ring gear.

A driving device for a wind turbine according to a fifth aspect of the present invention is configured such that the driving device for a wind turbine of the first aspect further includes a second controller that, after the operating state of the operation switching mechanism has switched to the unlinked/released state, controls driving of the electric motor such that the planetary ring gear is rotated to a position at which the first engagement pin that is biased by the first spring member is engaged with the first recessed portion.

According to this aspect of the invention, when the operating state of the operation switching mechanism switches to the unlinked/released state, the electric motor is driven under the control of the second controller so that the planetary ring gear is rotated to a position at which the first engagement pin is engaged with the first recessed portion. Accordingly, after the operating state of the operation switching mechanism has switched to the unlinked/released state, it can quickly return to the linked state.

The driving device for a wind turbine according to the second aspect of the present invention is configured such that the operation switching mechanism provided in the input shaft includes a first tubular portion that has a tubular shape and is fixed to an outer circumference of the output shaft, a second tubular portion that is disposed concentrically with the first tubular portion with an inner circumference of the second tubular portion being in rotatably sliding contact with an outer circumference of the first tubular portion, a second engagement pin that is slidably disposed in the second tubular portion, has a front end portion that can protrude through the second tubular portion toward the first tubular portion so that the second engagement pin is engaged with a second recessed portion that is formed in the outer circumference of the first tubular portion, and restricts rotation of the first tubular portion relative to the second tubular portion, and a second spring member that is installed in the second tubular portion and biases the second engagement pin in a direction to cause the second engagement pin to protrude through the second tubular portion toward the first tubular portion. The operation switching mechanism is configured such that, when a torque of a predetermined magnitude or more acts between the first tubular portion and the second tubular portion, the second engagement pin is disengaged from the second recessed portion, and the operating state switches from the linked state in which the rotation of the first tubular portion relative to the second tubular portion is restricted, to the unlinked/released state in which the first tubular portion rotates relative to the second tubular portion.

According to this aspect of the invention, the operation switching mechanism provided in the input shaft is compactly constituted by the first and second tubular portions that are concentrically and rotatably disposed relative to each other, and the second engagement pin and the second spring member that are installed in the first and second tubular portions. Thus, the operation switching mechanism can be easily incorporated into the input shaft. Furthermore, the structure that switches its operating state between the linked state and the unlinked/released state depending on the magnitude of the torque acting on the input shaft can be realized with a simple structure constituted by the first tubular portion, the second tubular portion, the second engagement pin, and the second spring member.

A driving device for a wind turbine according to the third aspect of the present invention is configured such that the holding unit includes a third engagement pin that has a front end portion that can protrude toward the planetary ring gear from the input shaft side to the output portion side in a direction parallel to an axial direction of the planetary ring gear so that the third engagement pin is engaged with a third recessed portion that is formed in an end face of the planetary ring gear, and a biasing mechanism that is installed in the body and biases the third engagement pin in a direction to cause the third engagement pin to protrude toward the planetary ring gear.

According to this aspect of the invention, the third engagement pin biased by the biasing mechanism installed inside the body protrudes parallel to the axial direction of the planetary ring gear and is engaged with the end face of the planetary ring gear. Thus, the structure that switches its operating state between the linked state and the unlinked/released state depending on the magnitude of torque acting between the holding unit and the planetary ring gear can be installed inside the body. This realizes the operation switching mechanism that is free from leakage of lubricating oil contained in the body.

A driving device for a wind turbine according to a sixth aspect of the present invention is configured such that, in the driving device for a wind turbine of the third aspect, a plurality of the third engagement pins are provided, and the biasing mechanism includes a retaining plate that holds the third engagement pins, and a single third spring member that causes the retaining plate to protrude toward the planetary ring gear so that the third engagement pins are biased in a direction to cause the third engagement pins to protrude toward the planetary ring gear.

According to this aspect of the invention, the biasing mechanism biases the retaining plate by a single third spring member and thereby biases the plurality of third engagement pins toward the planetary ring gear via the retaining plate. Thus, the configuration can be simplified as compared with the case where a plurality of spring members are provided in order to bias the plurality of third engagement pins. In the case where a plurality of spring members are provided for biasing the third engagement pins, complicated operations are necessary such as adjusting biasing loads applied by the spring members for adjusting the third engagement pins, and in addition, adjusting a balance between the spring members. In contrast, because only the single third spring member is provided for biasing a plurality of third engagement pins, the operation of adjusting the biasing load applied by the third spring member is facilitated.

A driving device for a wind turbine according to an seventh aspect of the present invention is configured such that, in the driving device for a wind turbine of the sixth aspect, the third spring member is a ring-shaped spring member that is formed rising upward in a dish shape.

In the case where the spring member that biases the third engagement pins is a coil spring, it tends to be difficult to ensure a spring specification that enables a large biasing load to be output with a coil spring that can be installed in a limited space in the body of the driving device for a wind turbine. Thus, in the structure that switches its operating state between the linked state and the unlinked/released state depending on the magnitude of the torque acting between the holding unit and the planetary ring gear, the magnitude of a torque that can be set as the above torque tends to be low. In contrast, according to the above aspect of the present invention, the third spring member is a coned disc spring that is a ring-shaped spring member formed rising upward in a dish shape. Thus, the third spring member with a spring specification that enables a sufficiently large biasing load to be output can be installed in even the limited space in the body. Accordingly, the predetermined magnitude of the torque with which the operating state of the operation switching mechanism switches between the linked state and the unlinked/released state can be set to a sufficiently large value.

It should be appreciated that the above and other objects, and features and advantages of the present invention will become apparent from the following description taken in conjunction with the accompanying drawings.

### BRIEF DESCRIPTION OF THE DRAWINGS

FIG. 1 is a perspective view of a wind turbine to which a driving device for a wind turbine according to a first embodiment of the present invention is applied.
FIG. 2 is an enlarged cross-sectional view of a movable portion of the wind turbine shown in FIG. 1, the movable portion being a portion where a nacelle is rotatably installed on a tower.
FIG. 3 is a cross-sectional view of the driving device for a wind turbine according to the first embodiment of the present invention, viewed from the front side.
FIG. 4 is an enlarged cross-sectional view of part of FIG. 3.
FIG. 5 is a cross-sectional view viewed from the position indicated by arrows A-A in FIG. 4.
FIG. 6 is cross-sectional view viewed from the position indicated by the arrows A-A in FIG. 4.
FIG. 7 is a cross-sectional view of a driving device for a wind turbine according to a second embodiment of the present invention, viewed from the front side.
FIG. 8 is an enlarged cross-sectional view of an input shaft of the driving device for a wind turbine shown in FIG. 7.
FIG. 9 is a cross-sectional view viewed from the position indicated by arrows C-C in FIG. 8.
FIG. 10 is an enlarged cross-sectional view of part of a driving device for a wind turbine according to a third embodiment of the present invention, viewed from the front side.
FIG. 11 is a cross-sectional view viewed from the position indicated by arrows D-D in FIG. 10.

### DETAILED DESCRIPTION OF THE INVENTION

Hereinafter, embodiments for carrying out the present invention will be described with reference to the accompanying drawings. A driving device for a wind turbine according to each embodiment of the present invention can be widely used as a driving device for a wind turbine that is installed in a wind turbine and drives one structure (second structure) to rotate relative to another structure (first structure) in a movable portion of the wind turbine. In particular, the driving device for a wind turbine according to each embodiment of the present invention can be used as a yaw driving device that drives a nacelle to yaw and rotate relative to a tower of the wind turbine, and a pitch driving device that drives shaft portions of blades to pitch and rotate relative to a hub on the nacelle side. Note that although the following descriptions of the first to third embodiments will take the example of the case in which the driving device for a wind turbine is used as a yaw driving device, the present invention is not limited to this example and is widely applicable to other driving devices for a wind turbine including a pitch driving device.

### First Embodiment

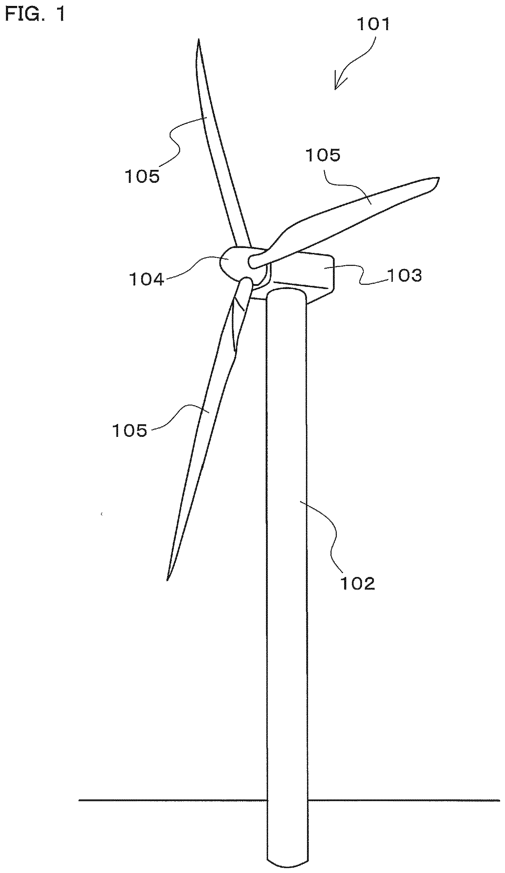

FIG. 1 is a perspective view of a wind turbine 101 to which driving devices for a wind turbine (wind turbine driving devices) 1 according to the first embodiment of the present invention are applied. As shown in FIG. 1, the wind turbine 101 includes, for example, a tower 102, a nacelle 103, a hub 104 that forms a main shaft portion, and blades 105. The tower 102 is installed extending vertically upward from the ground, and the nacelle 103 is rotatably installed on the top of the tower 102. The nacelle 103 is installed so as to be rotated (turned around) in a horizontal plane by the wind turbine driving devices 1, which will be described later, and a power transmission shaft, an electricity generator, and so on, which are not shown, are disposed inside the nacelle 103. The hub 104 is coupled to the aforementioned power transmission shaft and is rotatably provided on the nacelle 103. Multiple (in this embodiment, three) blades 105 are attached to the hub 104, extending radially at equiangular intervals. Note that the blades 105 are installed on a shaft portion provided in the hub 104 so as to be rotatable relative to the hub 104 centered on the axis of the shaft portion. The blades 105 are configured to change their pitch angles by being rotationally driven by a pitch driving device, which is not shown.

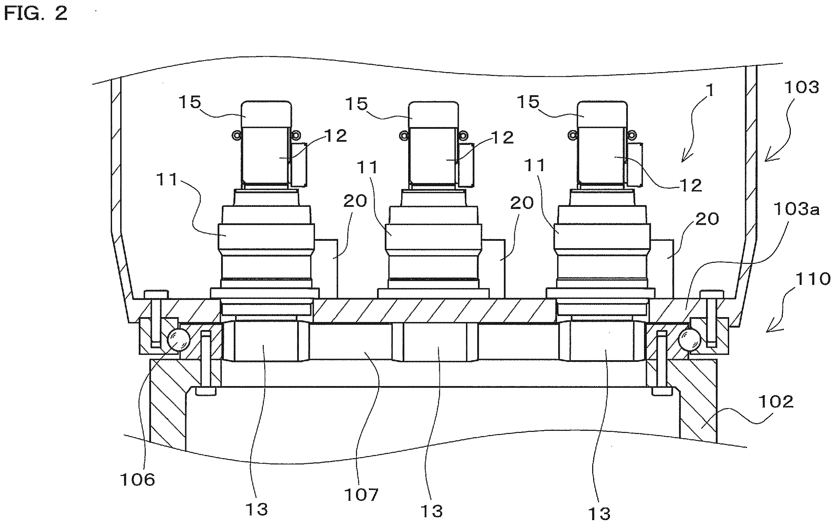

FIG. 2 is an enlarged cross-sectional view of a movable portion 110 of the wind turbine 101 where the nacelle 103 is rotatably installed on the tower 102. Note that FIG. 2 is not a cross-sectional view of the wind turbine driving device 1, but a full view thereof. The nacelle 103 is rotatably installed at its bottom portion 103a on the top portion of the tower 102 via a bearing 106. A ring gear 107 having internal teeth on its inner circumference is fixed to the top portion of the tower 102 (in FIG. 2, the internal teeth of the ring gear 107 are not shown). Note that the teeth of the ring gear 107 do not necessarily have to be provided on the inner circumference of the ring gear 107 and may be provided on the outer circumference thereof.

In the nacelle 103, multiple wind turbine driving devices 1 are disposed with their bodies 11 fixed to the bottom portion 103a. Electric motors 12 are fixed respectively to the bodies 12. The wind turbine driving devices 1 are disposed such that their output pinions 13 project downward from holes formed in the bottom portion 103a of the nacelle 103 and mesh with the ring gear 107 (in FIG. 2, the pinions 13 are shown schematically). The wind turbine driving devices 1 are disposed at multiple (e.g., four) locations in the inner circumferential direction of the ring gear 107. By installing the wind turbine driving devices 1 in the movable portion 110 as described above, the pinions 13 in the present embodiment are configured to mesh with the ring gear 107 fixed to the tower 102, which is the first structure in the movable portion 110. The electric motors 12 are each fixed to the nacelle 103, which is the second structure, that is rotatably installed on the first structure in the movable portion 110 (i.e., the electric motors 12 are fixed to the nacelle 103 via the bodies 11).

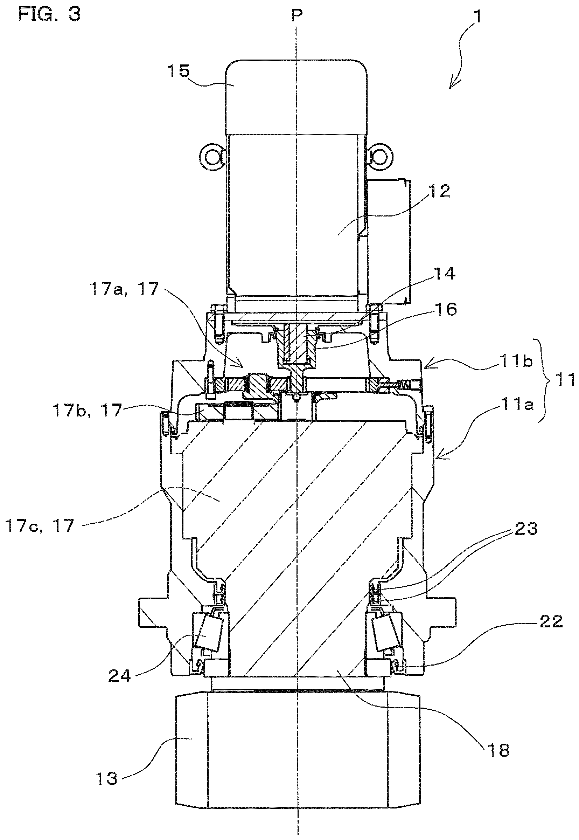

Next is a detailed description of the wind turbine driving devices 1 according to Embodiment 1 of the present invention. FIG. 3 is a cross-sectional view of a wind turbine driving device 1, viewed from the front side. The wind turbine driving devices 1 shown in FIGS. 2 and 3 are provided as yaw driving devices that cause the nacelle 103 to rotate relative to the tower 102 as described above. The wind turbine driving devices 1 each include, for example, the body 11, the electric motor 12, the pinion 13, an output shaft 14, a braking mechanism 15, an input shaft 16, a speed reduction portion 17, an output portion 18, an operation switching mechanism 19, and a controller 20. Note that the illustration of the controller 20 of the wind turbine driving device 1 has been omitted in FIG. 3.

As shown in FIGS. 2 and 3, the wind turbine driving devices 1 are each configured such that the electric motor 12 is fixedly attached to the body 11 on one end side located on the upper side, and the output portion 18 is disposed projecting from the body 11 on the other end side located on the lower side. The pinion 13 is fixed to one end of the output portion 18. The wind turbine driving devices 1 rotate the nacelle 103 by slowing down and transmitting rotational driving forces that are input from the electric motors 12 to the pinions 13 and rotating these pinions 13 that are in meshing engagement with the ring gear 107. Note that in the following description, the input side of the wind turbine driving devices 1 on which the electric motors 12 are attached to is referred to as a "first end side", and the output side thereof on which the pinions 13 are disposed is referred to as a "second end side" (the same applies to the description of the second and third embodiments).

The output shaft 14 is provided as an output shaft portion of the electric motor 12 that outputs a rotational driving force of the electric motor 12. The input shaft 16, which will be described later, is provided as a shaft member that is coupled to the output shaft 14 and receives input of a rotational driving force from the electric motor 12. The braking mechanism 15 is attached to the electric motor 12 and serves as a friction brake for stopping the output shaft 14.

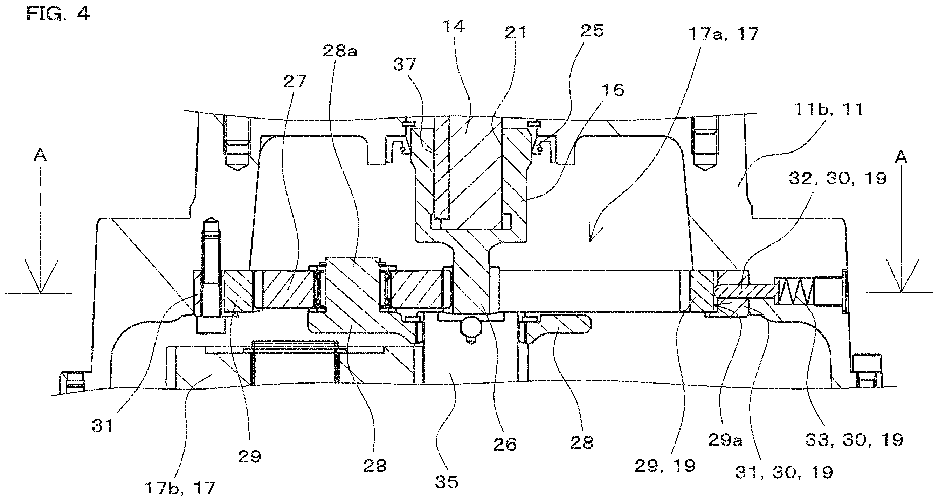

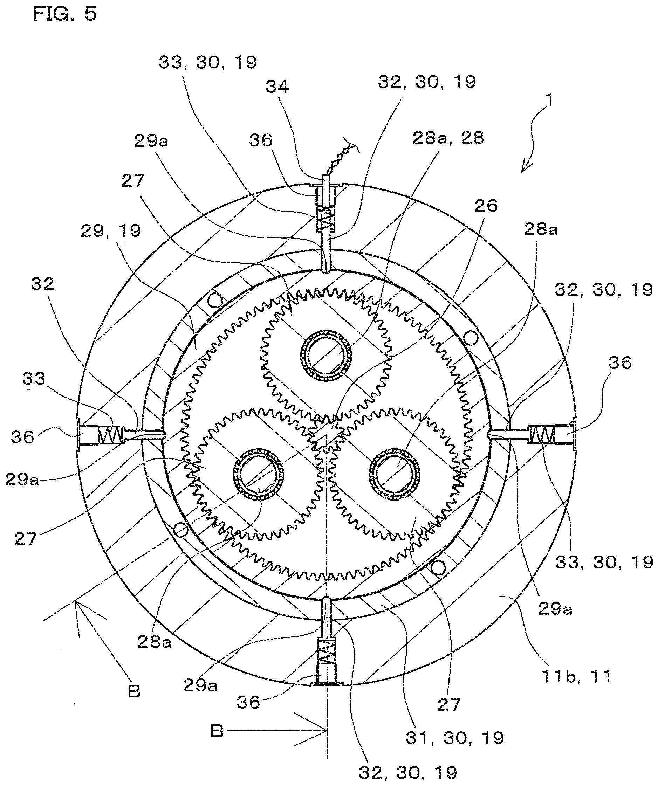

FIG. 4 is an enlarged cross-sectional view of part of FIG. 3, illustrating part of the input shaft 16 and the speed reduction portion 17. FIG. 5 is a cross-sectional view viewed from the position indicated by arrows A-A in FIG. 4. Note that the internal cross section of the body 11 shown in FIGS. 3 and 4 correspond to a cross section viewed from the position indicated by arrows B-B in FIG. 5. As shown in FIGS. 3 to 5, the input shaft 16 is coupled to the output shaft 14 and configured to transmit a rotational driving force to the speed reduction portion 17.

The input shaft 16 has a tubular portion provided with a coupling hole 21 that is open to the first end side and in which the end portion of the output shaft 14 on the second end side is inserted. The coupling hole 21 has a keyway formed therein. The input shaft 16 and the end portion of the output shaft 14 that is inserted and fitted into the coupling hole 21 are fixedly coupled to each other by a key coupling via a key 37 that is fitted in the keyway The input shaft 16 is integrally formed with a sun gear 26 of a planet gear speed reducer 17a of the speed reduction portion 17, which will be described later, on the second end side opposite the first end side on which the coupling hole 21 is provided. This configuration allows the input shaft 16 to transmit a rotational driving force to the planet gear speed reducer 17a.

The body 11 includes a case 11a that houses the input shaft 16 and the speed reduction portion 17, and a cover 11b. Note that the output shaft 14, the input shaft 16, the speed reduction portion 17, and the output portion 18 are disposed in series in a direction along a rotation center line P (indicated by the dashed dotted line in FIG. 3) of the wind turbine driving device 1 inside the body 11. The interior of the body 11 in which the speed reduction portion 17 is disposed is hermetically sealed from the outside, and lubricating oil is sealed therein.

The case 11a has a tubular shape with their ends both open, with the opening of the case 11a on the first end side being covered with the cover 11b, and the output portion 18 projecting from the opening on the second end side. Output seal members (22, 23) are attached to the inner circumference of the case 11a on the second end side. The output-side sealing members (22, 23) have such a ring shape that their lip portions are in sliding contact with the output portion 18 and a ring-shaped member attached therearound and thereby seal the lubricating oil in the body 11. In FIG. 3, an illustration of the lubricating oil in the body 11 has been omitted. Also, a bearing 24 is attached to the inner circumference of the end portion of the case 11a on the second end side, and the output portion 18 is rotatably held on the case 11a via the bearing 24.

The cover 11b has a tubular shape and is configured such that its diameter is reduced in a stepped manner in a direction from the second end side to the first end side. The end portion of the cover 11b on the second end side is fixed with bolts to the end portion of the case 11a on the first end side so as to cover the opening of the case 11a on the first end side. The cover 11b also has a disc-shaped portion on its first end side, the disc-shaped portion being provided with a through hole that is formed in the center and in which the output shaft 14 is inserted and disposed. The electric motor 12 is fixed to this disc-shaped portion. Note that an input-side sealing member 25 that has a ring shape and seals the lubricating oil in the body 11 is attached to the inner circumference of the through hole formed in the aforementioned disc-shaped portion. This input-side sealing member 25 is disposed such that its lip portion on the inner circumference is in sliding contact with the outer circumference of a coupling portion 16a of the input shaft 16.

The speed reduction portion 17 shown in FIG. 3 to 5 is coupled to the input shaft 16 and the output portion 18, and configured to slow down and transmit a rotational driving force that is input from the input shaft 16 and to output the rotational driving force to the output portion 18 to which the pinion 13 is fixed. Note that the pinion 13 is attached to the end of the output portion 18 on the second end side via a spline coupling and is fixed to the output portion 18 with, for example, a fixing mechanism (not shown) that includes a ring nut in threaded engagement with the end of the output portion 18.

The speed reduction portion 17 may be configured as, for example, a spur gear speed reducer, a planet gear speed reducer, an eccentric speed reducer, or a speed reducer configured by any combination of these speed reducers. In the present embodiment, the speed reduction portion 17 is configured as a mechanism that includes a planet gear speed reducer 17a that receives input of a rotational driving force from the input shaft 16, a spur gear 17b that receives input of a rotational driving force from the planet gear speed reducer 17a, and an eccentric speed reducer 17c that receives input of a rotational driving force from the spur gear 17b and outputs the rotational driving force to the output portion 18. In FIG. 3, the eccentric speed reducer 17c is indicated by broken lines, and a detailed illustration thereof has been omitted.

The planet gear speed reducer 17a constitutes a first speed reduction portion of the present embodiment that is coupled to the input shaft 16 and slows down and transmits the rotational driving force that is input to the input shaft 16. The spur gear 17b and the eccentric speed reducer 17c constitute a second speed reduction portion of the present embodiment that is coupled to the output portion 18, further slows down and transmits the rotational driving force transmitted from the planet gear speed reducer 17a, which is the first speed reduction portion, and outputs the rotational driving force to the output portion 18. Note that the eccentric speed reducer 17c, which is not illustrated in detail, includes a crankshaft, an external tooth gear, and a carrier.

The planet gear speed reducer 17a includes, for example, the sun gear 26, planet gears 27, a planet carrier 28, a planetary ring gear 29, and an output gear 35. The sun gear 26 is provided as a spur gear portion disposed on the rotation center line P of the wind turbine driving device 1 and is integrally formed with the input shaft 16 on the second end side of the input shaft 16 as described above. Multiple planet gears 27 are provided as spur gears around the sun gear 26 at equiangular intervals in the circumferential direction of the sun gear 26. The planet gears 27 are disposed so as to revolve around the sun gear 26 while rotating on their axes in meshing engagement with the sun gear 26.

The planet carrier 28 is provided with multiple shaft portions 28a, the shaft portions 28a supporting the respective corresponding planet gears 27 so that the planet gears 27 can freely rotate on their axes. The planet carrier 28 that is integrally formed with the shaft portions 28a is also configured to support the planet gears 27 such that the planet gears 27 can freely revolve around the sun gear 26. The output gear 35 is provided as a shaft gear member and disposed on the rotation center line P. The output gear 35 is provided with spline teeth on its first end side, the spline teeth being fitted in a spline groove provided on the inner circumference of the planet carrier 28, and a gear portion on its second end side, the gear portion meshing with the spur gear 17b.

The planetary ring gear 29 is provided as a ring-shaped gear member with teeth on its inner circumference, disposed around the planet gears 27, and configured such that its teeth on the inner circumference mesh with the respective corresponding teeth of the planet gears 27. The planetary ring gear 29 provided in the planet gear mechanism 17a, which is the first speed reduction portion, is also configured as a constituent element of the operation switching mechanism 19, which will be described later.

The operation switching mechanism 19 is provided in a driving force transmission path that is a path through which a driving force is transmitted from the output shaft 14 to the pinion 13, and is provided as a mechanism that switches its operating state depending on the magnitude of the torque acting thereon. The operation switching mechanism 19 includes the planetary ring gear 29 and a holding unit 30 that rotatably holds the planetary ring gear 29 in a state in which axial movement of the planetary ring gear 29 (movement in the direction parallel to the rotation center line P) relative to the body 11 is restricted. In the present embodiment, the operation switching mechanism 19 is configured such that the planetary ring gear 29 constituting part of the operation switching mechanism 19 is provided in the planet gear speed reducer 17a, which is the first speed reduction portion, in the driving force transmission path.

The holding unit 30 includes a retaining ring member 31, engagement pins 32, and spring members 33. The retaining ring member 31 is a ring-shaped member and is fixed with bolts to a stepped diameter reducing portion of the inner circumference of the cover 11b of the body 11. The retaining ring member 31 is configured to be capable of coming into sliding contact with the outer circumference of the planetary ring gear 29 with its inner circumference and to hold the planetary ring gear 29 along the outer circumference of the planetary ring gear 29. Note that the retaining ring member 31 has a flange portion that is locked against the planetary ring gear 29, at its inner circumferential edge on the second end side. With this configuration, the planetary ring gear 29 is held between the flange portion of the retaining ring member 31 that is fixed with bolts to the cover 11b and the inner wall of the cover 11b, and accordingly, the axial movement of the planetary ring gear 29 relative to the body 11 is restricted.

The engagement pins 32 are pin-shaped members, each having a cylindrical body portion, with their front end portions having a hemispherical shape and their other end portions having a flanged flat end face. Note that multiple engagement pins 32 that are provided constitute a first engagement pin of the present embodiment. The engagement pins 32 are each slidably disposed in the retaining ring member 31, with their front end portions inwardly penetrating through the through holes formed in the retaining ring member 31. These engagement pins 32 are configured such that their front end portions protrude through the retaining ring member 31 toward the planetary ring gear 29 so as to be engaged with recessed portions 29a formed in the outer circumference of the planetary ring gear 29.

The multiple recessed portions 29a formed in the outer circumference of the planetary ring gear 29 correspond respectively to the engagement pins 32 and constitute a first recessed portion of the present embodiment. The recessed portions 29a are recessed openings each having a shape that corresponds to the shape of the front end portion of the engagement pin 32. Note that while the present embodiment takes the example of the configuration in which multiple engagement pins 32 and multiple recessed portions 29a are provided and disposed at equiangular intervals in the circumferential direction of the retaining ring member 31 and the planetary ring gear 29, this does not need to be the case. Alternatively, only a single engagement pin 32 and a single recessed portion 29a may be provided, or even if multiple engagement pins 32 and multiple recessed portions 29a are provided, they do not necessarily have to be disposed at equiangular intervals in the circumferential direction of the retaining ring member 31 and the planetary ring gear 29. As another alternative, the number of recessed portions 29a may be greater than that of engagement pins 32.

The spring members 33 are coil springs, for example, and the multiple spring members 33 that are provided constitute a first spring member of the present embodiment. The spring members 33 are installed in their elastically-deformed and compressed state in multiple spring chambers that are hole-like spatial domains in the cover 11b of the body 11. The spring members 33 are also disposed such that their one end portions are supported by lid members 36 that are fixed to the cover 11b so as to close the spring chambers from the outside, and their other end portions abut on the flanged flat end faces of the engagement pins 32. With this configuration, the spring members 33 bias the engagement pins 32 in a direction to protrude through the retaining ring member 31 toward the planetary ring gear 29 in the radial direction of the retaining ring member 31 and the planetary ring gear 29.

Note that the cover 11b is further provided with through holes that allow the through holes formed in the retaining ring member 31 and the spring chambers to communicate with each other and in which the body portions of the engagement pins 32 are slidably disposed. The through holes of the cover 11b that communicate with the spring chambers are formed so as to have a reducing diameter in a direction toward the spring chambers and to be locked to the flanged end portions of the engagement pins 32 at the end portions that communicate with the spring chambers. With this configuration, the amount of protrusion of the engagement pins 32 from the retaining ring member 31 is restricted. Note that while the present embodiment takes the example of the configuration in which the spring members 33 are disposed in the body 11, this does not need to be the case, and it is sufficient for the spring members 33 to be disposed in at least either of the body 11 and the retaining ring member 31.

When the above-described operation switching mechanism 19 is in a state in which the front end portions of the engagement pins 32 biased by the spring members 33 protrude toward the planetary ring gear 29 and are in engagement with the recessed portions 29a, the planetary ring gear 29 is linked with the retaining ring member 31. In other words, the engagement of the front ends of the engagement pins 32, which protrude through the retaining ring member 31, with the planetary ring gear 29 limits the rotation of the planetary ring gear 29 relative to the holding unit 30, and the operating state of the operation switching mechanism 19 is a linked state in which the driving force transmission path is linked.

During operation of the wind turbine driving device 1, the magnitude of the torque acting between the holding unit 30 and the planetary ring gear 29 is balanced, and a load from the recessed portions 29a in the form of recessed openings of the planetary ring gear 29 acts on the hemispherical front end portions of the engagement pins 32. Then, when a torque of a predetermined magnitude or more acts between the holding unit 30 and the planetary ring gear 29, the engagement pins 32 are biased against the spring forces of the spring members 33 toward the cover 11b to positions at which the engagement pins 32 are disengaged from the recessed portions 29a, due to the load acting on the end portions of the engagement pins 32 from the recessed portions 29a.

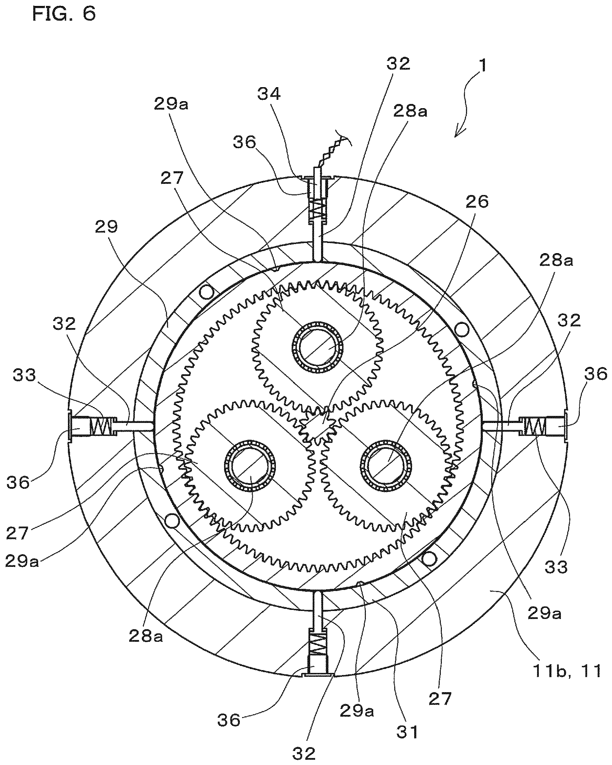

FIG. 6 is a cross-sectional view viewed from the position indicated by the arrows A-A in FIG. 4, like FIG. 5, illustrating a state in which the engagement pins 32 are disengaged from the recessed portions 29a. As shown in FIG. 6, if the engagement pins 32 are disengaged from the recessed portions 29a, the planetary ring gear 29 becomes rotatable relative to the retaining ring member 31 of the holding unit 30, and the operating state of the operation switching mechanism 19 switches from the aforementioned linked state to an unlinked/released state in which the driving force transmission path is unlinked and released. Note that the magnitude of the torque with which the engagement pins 32 are disengaged from the recessed portions 29a can be set to various levels by appropriately selecting the specifications of the spring member 33 or the like.

Once the operating state of the operation switching mechanism 19 has switched to the above unlinked/released state, it remains in the unlinked/released state as long as the torque acting between the holding unit 30 and the planetary ring gear 29 is the aforementioned predetermined magnitude or more. Specifically, even if the rotation of the planetary ring gear 29 causes the recessed portions 29a to reach the positions facing the engagement pins 32 and thereby causes the engagement pins 32 to protrude once by the spring forces of the spring members 33, the operating switching mechanism 19 will again operate in the same manner as described above, and accordingly, the engagement pins 32 will be disengaged from the recessed portions 29a.

However, if the magnitude of the torque acting on the operation switching mechanism 19 drops below the predetermined magnitude after the operation state of the operation switching mechanism 19 has switched to the unlinked/released state, the operating state of the operation switching mechanism 19 can return to the linked state. That is, in this case, when the rotation of the planetary ring gear 29 causes the recessed portions 29a to reach the positions facing the engagement pins 32, the front end portions of the engagement pins 32 that protrude by the spring forces of the spring members 33 are brought into engagement with the recessed portions 29a, and this engagement state is maintained without being disengaged. Accordingly, the operating state of the operation switching mechanism 19 returns to the linked state.

The wind turbine driving device 1 is also provided with a displacement sensor 34 as shown in FIGS. 5 and 6. The displacement sensor 34 is a sensor that detects displacement of an engagement pin 32 relative to the retaining ring member 31 and is configured as, for example, a noncontact detection type proximity sensor. Note that the displacement sensor 34 can be any kind of sensors that detect displacement of an engagement pin 32 relative to the retaining ring member 31 and may be configured as a sensor other than a proximity sensor, such as a contact detection type limit switch. While the present embodiment illustrates the configuration in which the displacement sensor 34 is provided corresponding to one of the engagement pins 32 as an example, this does not need to be the case, and multiple displacement sensors 34 may be provided corresponding to multiple engagement pins 32.

The controllers 20 shown in FIG. 2 are each configured as a control device that outputs command signals to driving devices for driving the braking mechanism 15 and the electric motor 12 and controls actuation of the braking mechanism 15 and the electric motor 12. The controller 20 includes, for example, a central processing unit (CPU), a memory, and an interface, which are not shown, and is further configured to receive a detection signal from the displacement sensor 34.

The controller 20 constitutes a first controller of the present embodiment. The controller 20 is configured to, when the displacement sensor 34 has detected that the engagement pin 32 has moved to a position at which the engagement pin 32 is disengaged from the recessed portion 29a, output a command signal for cancelling the operation of the braking mechanism 15 stopping the output shaft 14 to the driving device of the braking mechanism 15. Alternatively, the controller 20 is configured to, when the displacement sensor 34 has detected that the engagement pin 32 has moved to a position at which the engagement pin 32 is disengaged, output a command signal for reducing the output torque of the electric motor 12 to the driving device of the electric motor 12. In this way, the controller 20 is configured to, when the operating state of the operation switching mechanism 19 has switched from the linked state to the unlinked/released state, either control the braking mechanism 15 such that the operation of the braking mechanism 15 stopping output shaft 14 is cancelled, or control the electric motor 12 such that the output torque of the electric motor 12 is reduced. Note that, in the case where the output torque of the electric motor 12 is reduced when the operation state of the operation switching mechanism 19 has switched from the linked state to the unlinked/released state, the controller 20 may be configured to reduce the output torque of the electric motor 12 to zero.

The controller 20 also constitutes a second controller of the present embodiment. The controller 20 is configured to, for example, when a predetermined period of time has elapsed after the operating state of the operation switching mechanism 19 has switched to the unlinked/released state, control driving of the electric motor 12 such that the planetary ring gear 29 is rotated to a position at which the engagement pins 32 biased by the spring members 33 can be engaged with the recessed portions 29a. This allows the operating state of the operation switching mechanism 19 to speedily return to the linked state after it has switched to the unlinked/released state. Note that in the case where the electric motor 12 is driven so as to enable the return to the linked state as described above, the controller 20 is configured to, for example, drive the electric motor 12 at a low speed.

The above-described wind turbine driving device 1 is actuated by, for example, the controller 20 issuing a turning instruction to turn the direction of the nacelle 103 in accordance with the wind direction based on the result of detection by a wind vane (not shown) and thereby causing the electric motors 12 to operate. When the operation of each electric motor 12 is started, a rotational driving force is input from the output shaft 14 to the input shaft 16 and is transmitted from the input shaft 16 to the speed reduction portion 17. The speed reduction portion 17 then slows down and transmits the rotational driving force, and thereby the output portion 18 rotates and a high torque is output from the pinion 13 fixed to the output portion 18. The rotation with the pinions 13 of the wind turbine driving devices 1 in meshing engagement with the ring gear 107 causes the rotational operation of the nacelle 103 to which the multiple wind turbine driving devices 1 are attached. When the nacelle 103 is rotated to the desired stop position, the operations of the electric motors 12 are stopped and the braking mechanisms 15 are activated based on the instruction from the controller 20, as a result of which the nacelle 103 is stopped.

In the case where external forces caused by the wind act on the nacelle 103 during the halt in the rotation of the nacelle 103, they will act on the wind turbine driving devices 1 in which the output shafts 14 are stopped by the braking mechanisms 15. In the case where external forces caused by the wind act on the nacelle 103 that is being rotated, reverse forces may act on the wind turbine driving devices 1. At this time, if there is variation in meshing engagement between each of the pinions 13 of the wind turbine driving devices 1 and the ring gear 107 and excessive external forces intensively act on only one of the wind turbine driving devices 1, a torque of a predetermined magnitude or more will act on the operation switching mechanism 19 provided in the driving force transmission path of that wind turbine driving device. In this case, as described above, the operating state of the operation switching mechanism 19 switches from the linked state to the unlinked/released state. Accordingly, in the wind turbine driving device 1, the driving force transmission path is unlinked and released in the operation switching mechanism 19 and all constituent elements are protected without any damage to the wind turbine driving devices 1. When the magnitude of the torque acting on the operation switching mechanism 19 drops below the predetermined magnitude, the operating state of the operation switching mechanism 19 returns to the linked state and the normal operation continues as is.

Also, in the case where the output shaft 14 of one of the wind turbine driving devices 1 is locked due to some problems in the electric motor 12 thereof or abnormality in the control system or the like, the torque for the other wind turbine driving devices 1 rotating the ring gear 103 will be concentrated on the one wind turbine driving device 1, and as a result, a torque of a predetermined magnitude or more will act on the operation switching mechanism 19 of that wind turbine driving device 1. In this case as well, the operating state of the operation switching mechanism 19 switches from the linked state to the unlinked/released state. Thus, as in the above-described case, in that wind turbine driving device 1, the driving force transmission path is unlinked and released in the operation switching mechanism 19, and all constituent elements are protected without any damage to the wind turbine driving device 1.

With the wind turbine driving devices 1 described above, in the case of installing and using multiple wind turbine driving devices 1 in the movable portion 110 of the wind turbine 101, if external forces act on the nacelle 103 with there being variation in the state of meshing engagement between each pinion 13 and the ring gear 107 during the rotational operation of the nacelle 103 (second structure) relative to the tower 102 (first structure) or during a halt in the rotational operation, these external forces will intensively act on only one of the wind turbine driving devices 1. In this case, in the wind turbine driving device 1, if a torque of a predetermined magnitude or more acts on the driving force transmission path, the operating state of the operation switching mechanism 19 switches from the linked state to the unlinked/released state. There are also cases where, when multiple wind turbine driving devices 1 are installed and used, the output shaft 14 of the electric motor 12 of any of the wind turbine driving devices 1 may be locked due to the occurrence of problems or the like. In this case, according to the present embodiment, in the wind turbine driving device 1 in which the output shaft 14 of the electric motor 12 has been locked, a torque of a predetermined magnitude or more will act on the driving force transmission path by the forces of the other wind turbine driving devices 1, and accordingly, the operating state of the operation switching mechanism 19 switches from the linked state to the unlinked/released state. In this way, according to the present embodiment, the wind turbine driving device 1 that is under the action of excessive external forces enters a state in which the operating state of the operation switching mechanism 19 switches from the linked state to the unlinked/released state and the driving force transmission path is unlinked so as to transmit no force. With the place that is disconnected by the operation switching mechanism 19 as a boundary, the portion on the pinion side that is coupled to the pinion 13 is driven so as to run at idle (turns free) relative to the portion on the electric motor 12 side. This prevents the occurrence of damage to the wind turbine driving device 1, thus preventing breakage in the wind turbine driving device 1.

In the present embodiment, the operation switching mechanism 19 serving as a mechanism for preventing breakage in a wind turbine driving device 1 is provided as a mechanism for switching its operating state between the linked state and the unlinked/released state depending on the magnitude of the torque acting thereon. Thus, unlike the configuration disclosed in International Publication WO/2010/047064 in which the cutaway portion is provided as a mechanism for preventing breakage in a wind turbine driving device 1, broken pieces or the like will not be produced at the place where the driving force transmission path is disconnected. This avoids a situation in which broken pieces generated by such disconnection will enter the speed reduction portion 17 and make scratches on slide faces of gears, causing deterioration in durability, and eliminates the necessity for the operation itself of checking whether or not there is entry of broken pieces in the speed reduction portion 17. In the wind turbine driving device 1, the operating switching mechanism 19 is configured such that its operating state can return to the linked state when the magnitude of the torque acting on the operation switching mechanism 19 drops below a predetermined magnitude after the operating state has switched to the unlinked/released state. Thus, unlike the configuration provided with the cutaway portion as disclosed in International Publication WO/2010/047064, the operation of replacing a mechanism for preventing breakage in the wind turbine driving device 1 is also unnecessary. Accordingly, the number of troublesome maintenance operations such as checking the inside of the speed reduction portion 17 and replacing part of the mechanism can also be reduced.

It is thus possible, according to the present embodiment, to provide a wind turbine driving device 1 that, even if excessive external forces act on one of multiple wind turbine driving devices 1 that are installed and used, can prevent breakage in that wind turbine driving device 1 and reduce the number of troublesome maintenance operations associated with the mechanism for preventing breakage.

Because the operation switching mechanism 19 is provided in the first speed reduction portion provided as the planet gear speed reducer 17a, the wind turbine driving device 1 can easily realize a small operation switching mechanism 19 on the input side of the speed reduction portion 17 where a low torque acts. Also, because the first speed reduction portion is provided as the planet gear speed reducer 17a that includes, for example, the sun gear 26, the planet gears 27, and the planet carrier 28, the constituent elements can be compactly disposed in the direction of a plane perpendicular to the axial direction of the input shaft 16. Accordingly, the operation switching mechanism 19 can be installed through effective use of an area that is located in the vicinity of the input shaft 16 and extends in the planar direction perpendicular to the axial direction of the input shaft 16, and the constituent elements that are compactly disposed in that area. This increases the degree of freedom in the disposition and structure of the operation switching mechanism in the input side area of the speed reduction portion 17.

Furthermore, with the wind turbine driving device 1, since the operation switching mechanism 19 includes the planetary ring gear 29 disposed around the planet gears 27 and the holding unit 30 that rotatably holds the planetary ring gear 29, the operation switching mechanism 19 can be installed through effective use of an annular area around the planet gear speed reducer 17a. Accordingly, the operation switching mechanism 19 with a compact structure can be incorporated into the first speed reduction portion provided as the planet gear speed reducer 17a.

Furthermore, with the wind turbine driving device 1, the structure that switches the operating state between the linked state and the unlinked/released state depending on the magnitude of the torque acting between the holding unit 30 and the planetary ring gear 29 can be realized with a simple structure constituted by the retaining ring member 31, the engagement pins 32, and the spring members 33.

Moreover, with the wind turbine driving device 1, when the operating state of the operation switching mechanism 19 has switched to the unlinked/released state, i.e., when the engagement pins 32 are disengaged and the planetary ring gear 29 becomes rotatable relative to the retaining ring member 31, either the operation of the braking mechanism 15 stopping the output shaft 14 is cancelled or the output torque of the electric motor 12 is reduced. It is thus possible to suppress an increase in the rotational speed of the planetary ring gear 29 relative to the retaining ring member 31 and to thereby reduce the occurrence of wear in the engagement pins 32 and the outer circumference of the planetary ring gear 29.

Furthermore, with the wind turbine driving device 1, when the operating state of the operation switching mechanism 19 has switched to the unlinked/released state, the electric motor 12 is driven under the control of the controller 20, and as a result, the planetary ring gear 29 is rotated to a position at which the engagement pins 32 can be engaged with the recessed portions 29a. This allows the operating state of the operation switching mechanism 19 to speedily return to the linked state after the operating state of the operation switching mechanism 19 has switched to the unlinked/released state.

### Second Embodiment

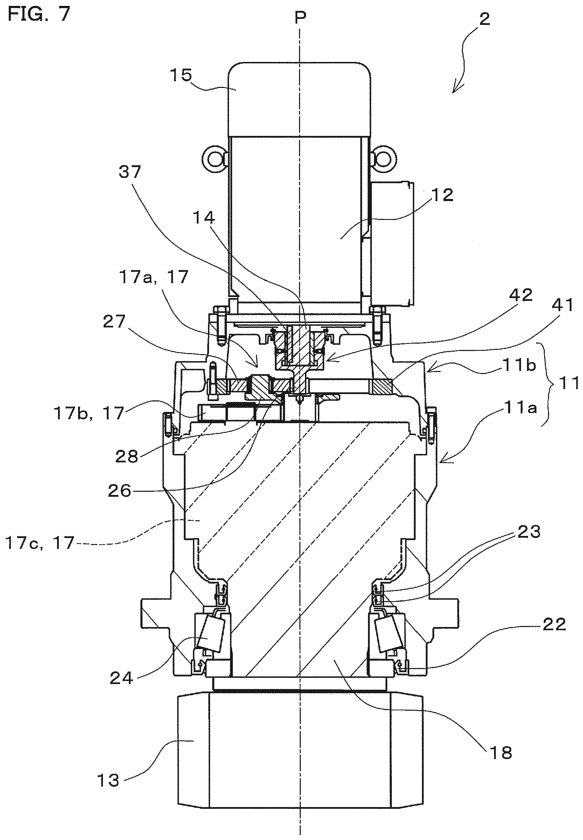

Next, the second embodiment of the present invention will be described. FIG. 7 is a cross-sectional view of a wind turbine driving device 2 according to the second embodiment, viewed from the front side. Like the wind turbine driving device 1 of the first embodiment, the wind turbine driving device 2 shown in FIG. 7 is provided as a yaw driving device and includes, for example, a body 11, an electric motor 12, a pinion 13, an output shaft 14, a braking mechanism 15, an input shaft 42, a speed reduction portion 17, an output portion 18, an operation switching mechanism 43, and a controller 20. Note that the illustration of the controller 20 in the wind turbine driving device 2 has been omitted from FIG. 7. The wind turbine driving device 2 differs from that of the first embodiment in the configurations of the input shaft 42 and the operation switching mechanism 43. In the description of the present embodiment, constituent elements that are the same as those of the first embodiment are denoted or cited by the same reference numerals in the drawings and a description thereof has been omitted. The following description mainly focuses on differences in configuration from the first embodiment.

In the wind turbine driving device 2, the operation switching mechanism 43 that is provided in the driving force transmission path is provided not in a planet gear speed reducer 17a of the speed reduction portion 17 but in the input shaft 42 that is coupled to the output shaft 14 and receives input of a rotational driving force from the electric motor 12. Note that because the planet gear speed reducer 17a of the wind turbine driving device 2 is not provided with an operation switching mechanism, the configuration of a planetary ring gear 41 that is disposed around multiple planet gears 27 with its inner peripheral teeth being meshed with the planet gears 27 differs from that of the first embodiment. In the wind turbine driving device 2, the planetary ring gear 41 is fixed with bolts to the inner circumferential side of a stepped diameter reducing portion of the cover 11b of the body 11.

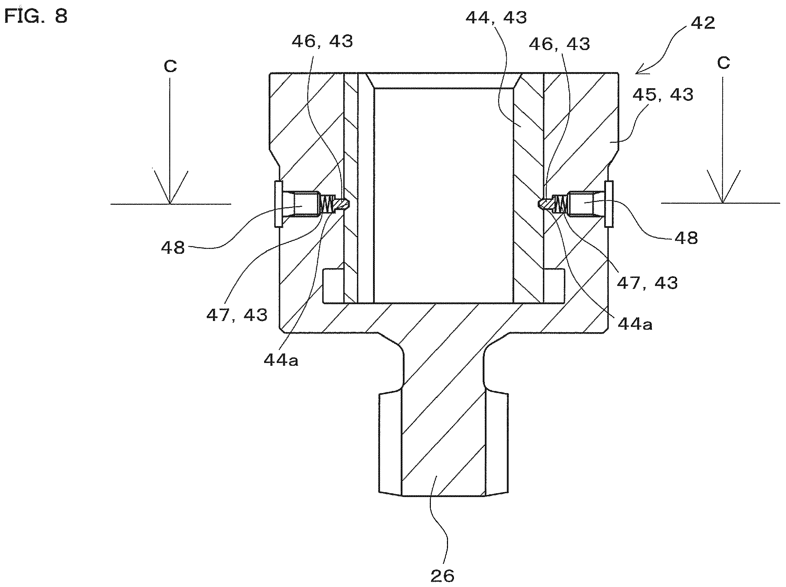

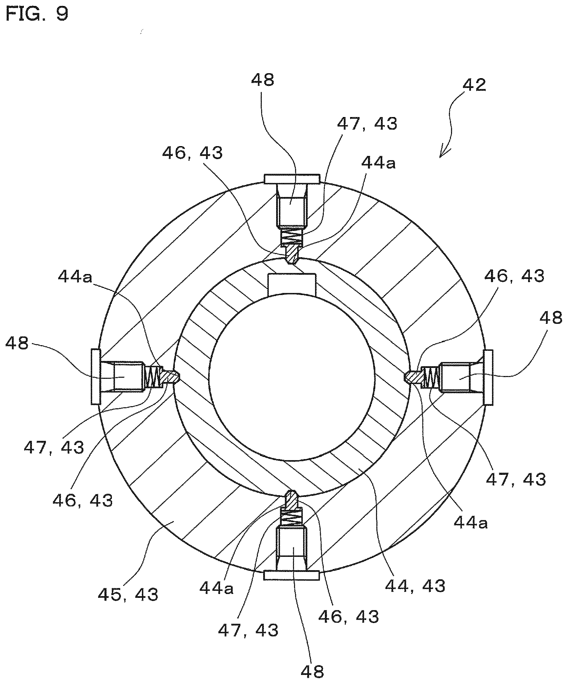

FIG. 8 is an enlarged cross-sectional view of the input shaft 42 provided with the operation switching mechanism 43. FIG. 9 is a cross-sectional view viewed from the position indicated by arrows C-C in FIG. 8. As shown in FIGS. 7 to 9, the input shaft 42 has a portion that is open to one end side (first end side) and in which an end portion of the output shaft 14 on the other end side (second end side) is inserted, as in the first embodiment. The end portion of the output shaft 14 and the input shaft 42 are fixedly coupled to each other by a key coupling via a key 37. A second tubular portion 45 of the input shaft 42, which will be described later, is integrally formed with a sun gear 26 on the second end side opposite the first end side of the input shaft 42 to which the output shaft 14 is coupled.

Like the operation switching mechanism 19 of the first embodiment, the operation switching mechanism 43 is provided in a driving force transmission path that is a path through which a driving force is transmitted from the output shaft 14 to the pinion 13, and is provided as a mechanism that switches its operating state depending on the magnitude of the torque acting thereon. What is different from the first embodiment is that the operation switching mechanism 43 is provided in the input shaft 42 and includes a first tubular portion 44, the second tubular portion 45, engagement pins 46, and spring members 47.

The first tubular portion 44 is a cylindrical member and fixed to the outer circumference of the output shaft 14 by a key coupling via the key 37. The second tubular portion 45 is a cylindrical portion that is open to the first end side and is integrally formed with the sun gear 26 on the second end side. The second tubular portion 45 is disposed concentrically with the first tubular portion 44 (i.e., the central axes of the second tubular portion 45 and the first tubular portion 44 are aligned with each other) and is rotatably disposed with its inner circumference being in sliding contact with the outer circumference of the first tubular portion 44.

The engagement pins 46 are pin members, each having a cylindrical body portion, with their front end portions having a hemispherical shape and their other end portions having a flanged flat end face. Note that multiple engagement pins 46 that are provided constitute a second engagement pin of the present embodiment. The engagement pins 46 are each slidably disposed in the second tubular portion 45, with their front end portions inwardly passing through the through holes formed in the second tubular portion 45. These engagement pins 46 are further configured such that their front end portions protrude through the second tubular portion 45 toward the first tubular portion 44 so as to be engaged with recessed portions 44a formed in the outer circumference of the first tubular portion 44.

Multiple recessed portions 44a are provided corresponding to the engagement pins 46 in the outer circumference of the first tubular portion 44, and constitute a second recessed portion of the present embodiment. The recessed portions 44a are recessed openings whose shape corresponds to the shape of the front ends of the engagement pins 46. Note that while the present embodiment takes the example of the configuration in which multiple engagement pins 46 and multiple recessed portions 44a are provided and disposed at equiangular intervals in the circumferential direction of the second tubular portion 45 and the first tubular portion 44, this does not need to be the case. Specifically, only a single engagement pin 46 and a single recessed portion 44a may be provided, or even in the case where multiple engagement pins 46 and multiple recessed portions 44 are provided, they do not need to be disposed at equiangular intervals in the circumferential direction of the second tubular portion 45 and the first tubular portion 44. As another alternative, the number of recessed portions 44a may be greater than that of engagement pins 46.

The spring members 47 are coil springs, for example, and multiple spring members 47 constitute a second spring member of the present embodiment. The spring members 47 are installed in their elastically-deformed and compressed state in multiple spring chambers that are hole-like spatial domains in the second tubular portion 45. The spring members 47 are also disposed such that their one end portions are supported by lid members 48 that are fixed to the second tubular portion 45 so as to close the spring chambers from the outside, and their other end portions abut on the flanged flat end faces of the engagement pins 46. In this way, the spring members 47 are configured so as to bias the engagement pins 46 in a direction to cause the engagement pints 46 to protrude through the second tubular portion 45 toward the first tubular portion 44 in the radial direction of the second tubular portion 45 and the first tubular portion 44. The second tubular portion 45 is configured such that the through holes in which the body portions of the engagement pins 46 are slidably disposed communicate with the spring chambers. The above through holes in which the body portions of the engagement pins 46 are disposed are formed so as to have a reducing diameter toward the spring chambers and to be locked to the flanged end portions of the engagement pins 46 at the end portions that communicate with the spring chambers. With this configuration, the amount of protrusion of the engagement pins 46 from the second tubular portion 45 is restricted.

When the above-described operation switching mechanism 43 is in a state in which the front end portions of the engagement pins 46 biased by the spring members 47 protrude toward the first tubular portion 44 and are engaged with the recessed portions 44a, the first tubular portion 44 is linked with the second tubular portion 45. That is, the engagement of the front end portions of the engagement pins 46, which protrude from the second tubular portion 45, with the first tubular portion 44 limits the rotation of the first tubular portion 44 relative to the second tubular portion 45, and the operating state of the operation switching mechanism 43 becomes a linked state in which the driving force transmission path is linked.

During operation of the wind turbine driving device 2, the magnitude of the torque acting between the first tubular portion 44 and the second tubular portion 45 is balanced, and a load from the recessed portions 44a in the form of recessed openings of the first tubular portion 44 acts on the hemispherical front end portions of the engagement pins 46. Then, if a torque of a predetermined magnitude or more acts between the first tubular portion 44 and the second tubular portion 45, the engagement pins 46 are biased against the spring forces of the spring members 47 toward the second tubular portion 45 to positions at which the engagement pins 46 are disengaged from the recessed portion 44a, due to the load acting on the end portions of the engagement pins 46 from the recessed portion 44a.

When the engagement pins 46 are disengaged from the recessed portions 44a, the first tubular portion 44 becomes rotatable relative to the second tubular portion 45, and the operating state of the operation switching mechanism 43 switches from the aforementioned linked state to an unlinked/released state in which the driving force transmission path is unlinked and released. Note that the magnitude of the torque that causes the engagement pins 46 to be disengaged from the recessed portion 44a can be set to various levels by appropriately selecting the specifications of the spring members 47 or the like.

Once the operating state of the operation switching mechanism 43 has switched to the aforementioned unlinked/released state, it remains in the unlinked/released state as long as the torque acting between the first tubular portion 44 and the second tubular portion 45 is the aforementioned predetermined magnitude or more. Specifically, even if the rotation of the first tubular portion 44 causes the recessed portions 44a to reach positions facing the engagement pins 46 and causes the engagement pins 46 to protrude once by the spring forces of the spring members 47, the operating switching mechanism 43 will again operate in the same manner as described above, and accordingly, the engagement pins 46 will be disengaged from the recessed portions 44a.

However, if the magnitude of the torque acting on the operation switching mechanism 43 drops below the predetermined magnitude after the operation state of the operation switching mechanism 43 has switched to the unlinked/released state, the operating state of the operation switching mechanism 43 can return to the linked state. That is, in this case, if the rotation of the first tubular portion 44 causes the recessed portions 44a to reach the positions facing the engagement pins 46, the front end portions of the engagement pins 46 that protrude by the spring forces of the spring members 47 are engaged with the recessed portions 44a and this engagement state is maintained without being disengaged. Accordingly, the operating state of the operation switching mechanism 43 returns to the linked state.

The above-described wind turbine driving device 2 of the present embodiment that is provided with the operation switching mechanism 43 can achieve the same effects as the wind turbine driving device 1 of the first embodiment. That is, it is possible according to the present embodiment to provide the wind turbine driving device 2 that can, even if excessive external forces act on one of multiple wind turbine driving devices 2 that are installed and used, prevent breakage in that wind turbine driving device 2 and reduce the number of troublesome maintenance operations associated with the mechanism for preventing breakage.

Furthermore, with the wind turbine driving device 2, the operation switching mechanism 43 provided in the input shaft 42 is compactly configured by the first tubular portion 44 and the second tubular portion 45 that are disposed rotatably and concentrically with respect to each other, and the engagement pins 46 and the spring members 47 that are disposed in the first tubular portion 44. Thus, the operation switching mechanism 43 can be easily incorporated into the input shaft 42. Moreover, the structure that switches its operating state between the linked state and the unlinked/released state depending on the magnitude of the torque acting on the input shaft 42 can be realized with a simple structure constituted by the first tubular portion 44, the second tubular portion 45, the engagement pins 46, and the spring members 47.

### Third Embodiment

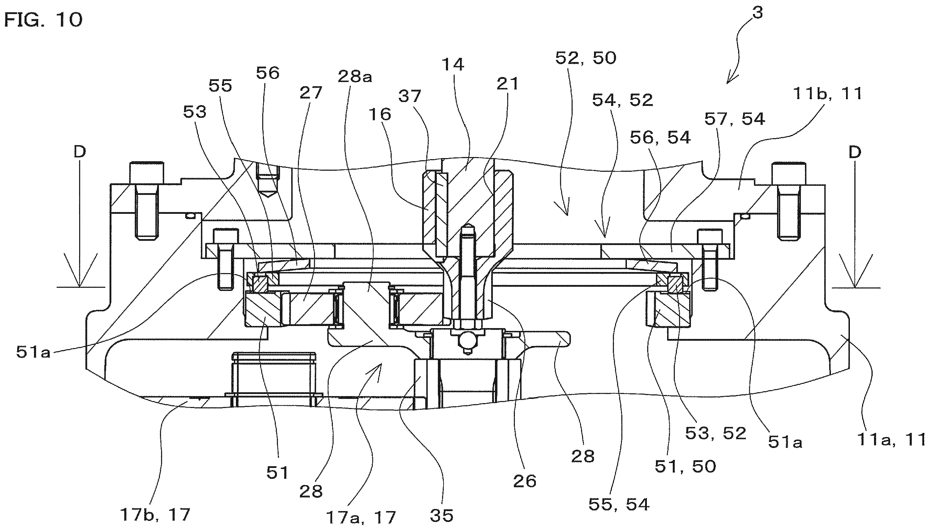

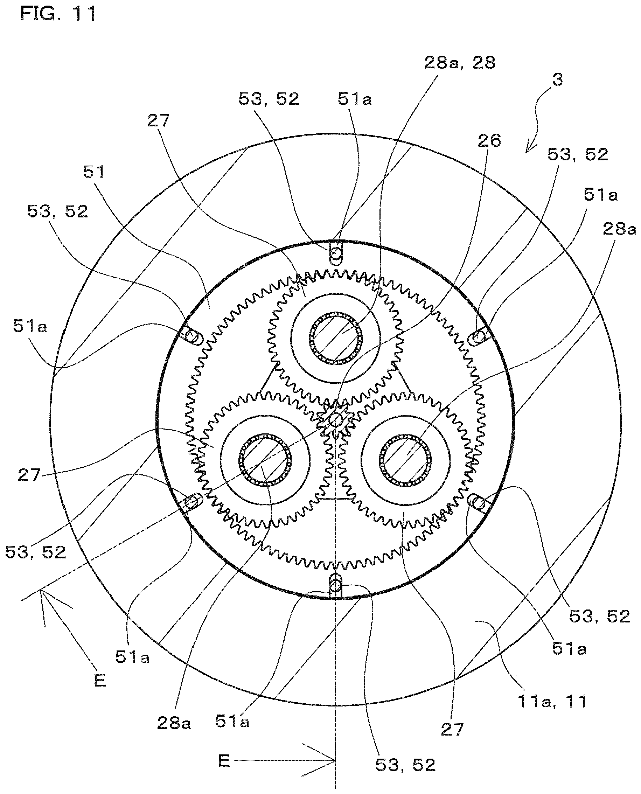

Next, the third embodiment of the present invention will be described. FIG. 10 is an enlarged cross-sectional view of part of a cross section of a wind turbine driving device 3 according to the third embodiment, viewed from the front side. FIG. 11 is a cross-sectional view viewed from the position indicated by arrows D-D in FIG. 10. Note that the internal cross section of a body 11 shown in FIG. 10 corresponds to a cross section viewed from the position indicated by arrows E-E in FIG. 11. Like the wind turbine driving device 1 of the first embodiment, the wind turbine driving device 3 shown in FIGS. 10 and 11 is provided as a yaw driving device and includes, for example, the body 11, an electric motor 12, a pinion 13, an output shaft 14, a braking mechanism 15, an input shaft 16, a speed reduction portion 17, an output portion 18, an operation switching mechanism 50, and a controller 20. Note that the illustration of the controller 20 in the wind turbine driving device 3 has been omitted from FIGS. 10 and 11. The wind turbine driving device 3 differs in the configuration of the operation switching mechanism 50 from the first embodiment. In the description of the present embodiment, constituent elements that are the same as those of the first embodiment are denoted or cited by the same reference numerals in the drawings and a description thereof has been omitted. The following description mainly focuses on differences in configuration from the first embodiment.

Like the operation switching mechanism 19 of the first embodiment, the operation switching mechanism 50 is provided in a driving force transmission path that is path through which a driving force is transmitted from the output shaft 14 to the pinion 13, and is provided as a mechanism that switches its operating state depending on the magnitude of the torque acting thereon. The operation switching mechanism 50 includes a planetary ring gear 51 and a holding unit 52 that rotatably holds the planetary ring gear 51 in a state in which axial movement of the planetary ring gear 51 (movement in a direction parallel to a rotation center line P) relative to the body 11 is restricted.

The operation switching mechanism 50 is also configured such that the planetary ring gear 51 constituting part of the operation switching mechanism 50 is provided in a planet gear speed reducer 17a that is a first speed reduction portion of the driving force transmission path. Like the planetary ring gear 29 of the first embodiment, the planetary ring gear 51 is disposed around multiple planet gears 27 and configured such that its inner peripheral teeth are meshed with the planet gears 27.

The planetary ring gear 51 is, however, attached to the body 11 in a different way from the planetary ring gear 29. To be specific, the planetary ring gear 51 is installed such that its end face on the second end side abuts on a portion of a case 11a of the body 11, the portion extending in the circumferential direction and protruding inwardly so as to have a flanged shape. The end face of the planetary ring gear 51 on the first end side is pressed toward the second end side by later-described engagement pins 53 of the holding unit 52 that is attached to the case 11a. The outer circumference of the planetary ring gear 51 and the end face thereof on the second end side are slidably disposed on the body 11. With the above configuration, the planetary ring gear 51 is rotatably held on the body 11 by the holding unit 52, and axial movement of the planetary ring gear 51 relative to the body 11 is restricted.

The holding unit 52 includes the engagement pins 53 and a biasing mechanism 54. The engagement pins 53 are pin members having a cylindrical body portion and a hemispherical front end portion. Note that multiple engagement pins 53 that are provided constitute a third engagement pin of the present embodiment. The engagement pins 53 are configured such that their front end portions protrude toward the planetary ring gear 51 from the input shaft 16 side to the output portion 18 side (i.e., from the first end side to the second end side) in parallel with the axial direction of the planetary ring gear 51 and are engaged with recessed portions 51a that are formed in the end face of the planetary ring gear 51.

The recessed portions 51a of the planetary ring gear 51 are provided in the end face of the planetary ring gear 51 on the first end side. Multiple recessed portions 51a that are provided corresponding to the engagement pins 53 constitute a third recessed portion of the present embodiment. The recessed portions 51a are formed as grooved portions having a recessed shape corresponding to the shape of the front end portions of the corresponding engagement pins 53. Note that while the present embodiment takes the example of the configuration in which multiple engagement pins 53 and multiple recessed portions 51a are provided and disposed at equiangular intervals in the circumferential direction of the planetary ring gear 51, this does not need to be the case. For example, the engagement pins 53 and the recessed portions 51a do not necessarily have to be disposed at equiangular intervals in the circumferential direction of the planetary ring gear 51. Alternatively, the number of recessed portions 51a may be greater than that of engagement pins 53.

The biasing mechanism 54 is installed inside the body 11 as a mechanism for biasing the engagement pins 53 in a direction to cause the engagement pins 53 to protrude toward the planetary ring gear 51. The biasing mechanism 54 includes a retaining plate 55, a coned disc spring 56, and a presser plate 57.

The retaining plate 55 is a flat ring-shaped plate member that is configured to hold multiple engagement pins 53. The retaining plate 55 is provided with multiple holes formed in a direction of a ring-shaped circumference. The number of holes that are provided is the same as the number of engagement pins 53, and these holes are disposed at equiangular intervals in the circumferential direction of the retaining plate 55. The end portions of the engagement pins 53 opposite the hemispherical front end portions thereof are fitted in and fixed to these holes. As a result, the multiple engagement pins 53 are held by the single retaining plate 55.

The single coned disc spring 56 is disposed on the first end side of the retaining plate 55. The coned disc spring 56 is disposed between and in contact with the retaining plate 55 and the presser plate 57, which will be described later. The coned disc spring 56 is a ring-shaped spring member that is formed so as to rise upward in a dish shape. This coned disc spring 56 is provided as a third spring member of the present embodiment that causes the retaining plate 55 to protrude toward the planetary ring gear 51 and thereby biases the multiple engagement pins 53 in a direction to cause the engagement pins 53 to protrude toward the planetary ring gear 51.

The presser plate 57 is a flat ring-shaped plate member that is configured to hold the coned disc spring 56 while pressing it against the retaining plate 55. The outer peripheral edge of the presser plate 57 is fixed with multiple bolts to the case 11a of the body 11. Note that the case 11a has a portion whose diameter increases in a stepped manner toward the first end side. With the outer peripheral edge of the presser plate 57 abutting on this stepped diameter increasing portion, the presser plate 57 is fixed to the body 11 with the above multiple bolts that protrude through the presser plate 57 and are in threaded engagement with the case 11a. Note that the input shaft 16 is disposed in a center area of central through holes provided in the presser plate 57, the coned disc spring 56, and the retaining plate 55.

When the above-described operation switching mechanism 50 is in a state in which the front end portions of the multiple engagement pins 53 biased by the coned disc spring 56 via the retaining plate 55 protrude toward the planetary ring gear 51 and are engaged with the recessed portions 51a, the planetary ring gear 51 is linked with the holding unit 52. That is, the engagement of the front end portions of the multiple engagement pins 53 with the planetary ring gear 51 limits the rotation of the planetary ring gear 51 relative to the holding unit 52, and the operating state of the operation switching mechanism 50 is a linked state in which the driving force transmission path is linked.

During operation of the wind turbine driving device 3, the torque acting between the holding unit 52 and the planetary ring gear 51 is balanced, and a load from the recessed portions 51a in the form of recessed openings of the planetary ring gear 51 acts on the hemispherical front end portions of the engagement pins 53. Then, if a torque of a predetermined magnitude or more acts between the holding unit 52 and the planetary ring gear 51, the engagement pins 53 are biased against the spring force of the coned disc spring 56 toward the presser plate 57 to positions at which the engagement pins 53 are disengaged from the recessed portions 51a, due to the load acting from the recessed portions 51a on the end portions of the engagement pins 53. At this time, the multiple engagement pints 53 are biased integrally with the retaining plate 55 toward the presser plate 57.

When the engagement pins 53 are disengaged from the recessed portions 51a, the planetary ring gear 51 becomes rotatable relative to the case 11a of the body 11, and the operating state of the operation switching mechanism 50 switches from the aforementioned linked state to an unlinked/released state in which the driving force transmission path is unlinked and released. Note that the magnitude of the torque that causes the engagement pins 53 to be disengaged from the recessed portions 51a can be set to various levels by appropriately selecting the specifications of the coned disc spring 56 or the like.

Once the operating state of the operation switching mechanism 50 has switched to the aforementioned unlinked/released state, it remains in the unlinked/released state as long as the torque acting between the holding unit 52 and the planetary ring gear 51 remains the aforementioned predetermined magnitude or more. That is, even if the rotation of the planetary ring gear 51 causes the recessed portions 51a to reach the positions facing the engagement pins 53 and causes the engagement pins 53 to protrude once by the spring force of the coned disc spring 56 acting via the retaining plate 55, the operating switching mechanism 50 will again operate in the same manner as described above, and accordingly, the engagement pins 53 will be disengaged from the recessed portions 51a.

However, if the magnitude of the torque acting on the operation switching mechanism 50 drops below the predetermined magnitude after the operating state of the operation switching mechanism 50 has switched to the unlinked/released state, the operating state of the operation switching mechanism 50 can return to the linked state. That is, in this case, when the rotation of the planetary ring gear 51 causes the recessed portions 51a to reach the positions facing the engagement pins 53, the front end portions of the engagement pins 53 that protrude by the spring force of the coned disc spring 56 acting via the retaining plate 55 are brought into engagement with the recessed portions 51a and this engagement state is maintained without being disengaged. As a result, the operating state of the operation switching mechanism 50 returns to the linked state.

The above-described wind turbine driving device 3 of the present embodiment that is provided with the operation switching mechanism 50 can achieve the same effects as the wind turbine driving device 1 of the first embodiment. That is, it is possible, according to the present embodiment, to provide the wind turbine driving device 3 that can, even if excessive external forces act on one of multiple wind turbine driving devices 3 that are installed and used, prevent breakage in that wind turbine driving device 3 and reduce the number of troublesome maintenance operations associated with the mechanism for preventing breakage.

Furthermore, with the wind turbine driving device 3, the engagement pins 53 biased by the biasing mechanism 54 disposed inside the body 11 are engaged with the end face of the planetary ring gear 51, protruding in parallel with the axial direction of the planetary ring gear 51. Thus, the structure that switches its operating state between the linked state and the unlinked/released state depending on the magnitude of the torque acting between the holding unit 52 and the planetary ring gear 51 can be installed inside the body 11. This makes it possible to realize the operation switching mechanism 50 that is free from leakage of lubricating oil contained in the body 11.

Furthermore, with the wind turbine driving device 3, the biasing mechanism 54 biases the retaining plate 55 by the coned disc spring 56, which is a single spring member, and thereby biases the multiple engagement pins 53 toward the planetary ring gear 51 via the retaining plate 55. This simplifies the configuration as compared with the case in which multiple spring members are provided in order to bias the multiple engagement pins 53. In addition, in the case where multiple spring members are provided in order to bias the engagement pins 53, complicated operations such as adjusting the biasing load applied by the spring members for biasing the engagement pins 53 and further adjusting a balance between the spring members are necessary. In contrast, providing only the single coned disc spring 56 as a spring member for biasing the multiple engagement pins 53 facilitates the operation of adjusting the biasing load given by the spring member (coned disc spring 56).

Moreover, with the wind turbine driving device 3, the coned disc spring 56 that is a ring-shaped spring member formed so as to rise upward in a dish shape is provided as a spring member for biasing the multiple engagement pins 53 via the retaining plate 55. This allows the spring member (coned disc spring 56) capable of outputting a sufficiently large biasing load to be installed even within the limited space in the body 11. Accordingly, a predetermined magnitude of torque that causes the operating state of the operation switching mechanism 50 to switch between the linked state and the unlinked/released state can be set to a sufficiently large value.

While embodiments of the present invention have been described thus far, the present invention is not limited to the embodiments described above, and various modifications may be made within the scope recited in the claims. For example, the following variations are possible.
(1) While the above-described embodiments take the example of the case where the wind turbine driving devices are provided as yaw driving devices, this case does not need to be the case. The wind turbine driving devices may be pitch driving devices that drive the blades, which are the second structure in the movable portion of the wind turbine, to rotate relative to the hub on the nacelle side, which is the first structure.
(2) While the above-described embodiments take the example of the case where the operation switching mechanism is provided in either the first speed reduction portion or the input shaft, this does not need to be the case. A configuration is also possible in which the operation switching mechanism is provided at a position other than the first speed reduction portion and the input shaft in the driving force transmission path. For example, a configuration is possible in which the operation switching mechanism is provided in the output shaft that outputs a rotational driving force of the electric motor.
(3) While the above-described embodiments take the example of the configuration in which the first speed reduction portion is configured as a planet gear speed reducer, this does not need to be the case, and the first speed reduction portion may be configured as a speed reducer other than the planet gear speed reducer.
(4) In the third embodiment described above, a configuration is also possible in which a displacement sensor and a controller configured in the same way as the displacement sensor and the first controller of the first embodiment are provided. Specifically, the wind turbine driving device of the third embodiment may be provided with a displacement sensor that detects displacement of the third engagement pins relative to the presser plate of the biasing mechanism, and a controller that controls the braking mechanism or the electric motor based on the detection result of the displacement sensor. This controller is configured to, when the above displacement sensor has detected that the third engagement pins have moved to positions at which they are disengaged from the third recessed portions, control the braking mechanism so that the operation of the braking mechanism stopping the output shaft of the electric motor is cancelled, or control the electric motor so that the output torque of the electric motor is reduced. According to this variation, when the operating state of the operation switching mechanism has switched to the unlinked/released state, i.e., when the third engagement pins are disengaged and the planetary ring gear becomes rotatable relative to the holding unit, the operation of the braking mechanism stopping the output shaft is cancelled, or the output torque of the electric motor is reduced. It is thus possible to suppress an increase in the rotational speed of the planetary ring gear relative to the holding unit and to reduce the occurrence of wear in the third engagement pins and the end face of the planetary ring gear.
(5) In the third embodiment described above, a configuration is also possible in which a controller configured in the same way as the second controller of the first embodiment is provided. Specifically, the wind turbine driving device of the third embodiment may be provided with a controller that controls driving of the electric motor such that after the operating state of the operation switching mechanism has switched to the unlinked/released state, the planetary ring gear is rotated to a position at which the third engagement pins biased by the third spring member can be engaged with the third recessed portions. According to this variation, when the operating state of the operation switching mechanism has switched to the unlinked/released state, the electric motor is driven under the control of the above controller so that the planetary ring gear is rotated to a position at which the third engagement pins are engaged with the third recessed portions. Thus, the operating state of the operation switching mechanism can speedily return to the linked state after the operating state of the operation switching mechanism has switched to the unlinked/released state.

The present invention is widely applicable as wind turbine driving devices that are installed in a wind turbine and drive to rotate one structure relative to the other structure in the movable portion of the wind turbine. The present invention is not limited to the above-described embodiments, and all modifications, applications and equivalents thereof that fall within the claims, for which modifications and applications would become apparent by reading and understanding the present specification, are intended to be embraced therein.

## Claims

1. A driving device (1) for a wind turbine, comprising:
a pinion (13) that meshes with a ring gear (107) that is fixed to a first structure in a movable portion of a wind turbine (101);
an electric motor (12) that is fixed to a second structure that is rotatably disposed on the first structure in the movable portion;
an output shaft (14) that outputs a rotational driving force of the electric motor (12);
an input shaft (16, 42) that is coupled to the output shaft (14) and receives input of a rotational driving force from the electric motor (12);
an output portion (18) to which the pinion (13) is fixed;
a speed reduction portion (17) that is coupled to the input shaft (16) and the output portion (18), slows down and transmits the rotational driving force that is input to the input shaft (16, 42), and outputs the rotational driving force to the output portion (18); and
a braking mechanism (15) for stopping the output shaft (14),
the driving device (1,2,3) for a wind turbine further comprising:
an operation switching mechanism (19, 43, 50) that is provided in a driving force transmission path and switches an operating state thereof depending on the magnitude of a torque acting thereon, the driving force transmission path being a path through which a driving force is transmitted from the output shaft (14) to the pinion (13),
wherein, when a torque of a predetermined magnitude or more acts on the operation switching mechanism (19, 43, 50), the operating state of the operation switching mechanism (19, 43, 50) switches from a linked state in which the driving force transmission path is linked, to an unlinked/released state in which the driving force transmission path is unlinked and released, and after the operating state has switched to the unlinked/released state and when the magnitude of the acting torque drops below the predetermined magnitude, the operating state is capable of returning to the linked state;
wherein the speed reduction portion (17) includes a first speed reduction portion (17a) and a second speed reduction portion (17b), the first speed reduction portion (17a) being coupled to the input shaft (16, 42) and slowing down and transmitting the rotational driving force that is input to the input shaft (16,42) and the second speed reduction portion (17b) being coupled to the output portion (18), further slowing down and transmitting the rotational driving force transmitted from the first speed reduction portion (17a), and outputting the rotational driving force to the output portion (18); and
at least part of the operation switching mechanism (19, 43, 50) is provided in at least one of the output shaft (14), the input shaft (16, 42), and the first speed reduction portion (17a) that are in the driving force transmission path;
wherein the first speed reduction portion (17a) is provided as a planet gear speed reducer that includes a sun gear (26), a plurality of planet gears (27) that mesh with the sun gear (26) and revolve around the sun gear (26) while rotating on axes of the planet gears (27), and a planet carrier (28) that supports the planet gears (27) such that the planet gears (27) are able to freely rotate on the axes of the planet gears (27) and to freely revolve around the sun gear (26), and
at least part of the operation switching mechanism (1, 3) is provided in the first speed reduction portion (17a);
wherein the operation switching mechanism (19, 50) includes a planetary ring gear (29, 51) and a holding unit (30, 52), the planetary ring gear (29, 51) being provided in the first speed reduction portion (17a) and disposed around the planet gears (27) so as to mesh with the planet gears (27), and the holding unit (30, 52) rotatably holding the planetary ring gear (29) in a state in which axial movement of the planetary ring gear (29, 51) relative to a body (11) is restricted, the body (11) housing the input shaft (16) and the speed reduction portion (17), and
when a torque of a predetermined magnitude or more acts between the holding unit (30,52) and the planetary ring gear (29, 51), the operating state switches from the linked state in which the rotation of the planetary ring gear (29, 51) relative to the holding unit (30, 52) is restricted, to the unlinked/released state in which the planetary ring gear (29, 51) rotates relative to the holding unit (30, 52);
wherein the holding unit (30) includes:
a retaining ring member (31) that is fixed to the body (11), has a ring shape, and holds the planetary ring gear (29) along an outer circumference of the planetary ring gear;
a first engagement pin (32) that is slidably disposed in the retaining ring member (31) and has a front end portion that can protrude through the retaining ring member (31) toward the planetary ring gear (29) so that the first engagement pin (32) is engaged with a first recessed portion (29a) that is formed in the outer circumference of the planetary ring gear (29); and
a first spring member (33) that is installed in at least either of the body (11) and the retaining ring member (31) and biases the first engagement pin (32) in a direction to cause the first engagement pin (32) to protrude through the retaining ring member (31) toward the planetary ring gear (29).

2. The driving device (1) for a wind turbine according to claim 1, further comprising:
a displacement sensor (34) that detects displacement of the first engagement pin (32) relative to the retaining ring member (31); and
a first controller (20) that, when the displacement sensor (34) detects that the first engagement pin (32) is moved to a position at which the first engagement pin (32) is disengaged from the first recessed portion (29a), controls the braking mechanism (15) such that the breaking mechanism (15) cancels the operation of stopping the output shaft (14), or controls the electric motor (12) such that an output torque of the electric motor (12) is reduced.

3. The driving device (1) for a wind turbine according to claim 1, further comprising:
a second controller (20) that, after the operating state of the operation switching mechanism (19) has switched to the unlinked/released state, controls driving of the electric motor (12) such that the planetary ring gear (29) is rotated to a position at which the first engagement pin (32) that is biased by the first spring member (33) is engaged with the first recessed portion (29a).

4. A driving device (2) for a wind turbine, comprising
a pinion (13) that meshes with a ring gear (107) that is fixed to a first structure in a movable portion of a wind turbine (101);
an electric motor (12) that is fixed to a second structure that is rotatably disposed on the first structure in the movable portion;
an output shaft (14) that outputs a rotational driving force of the electric motor (12);
an input shaft (42) that is coupled to the output shaft (14) and receives input of a rotational driving force from the electric motor (12);
an output portion (18) to which the pinion (13) is fixed;
a speed reduction portion (17) that is coupled to the input shaft (16, 42) and the output portion (18), slows down and transmits the rotational driving force that is input to the input shaft (16, 42), and outputs the rotational driving force to the output portion (18); and
a braking mechanism (15) for stopping the output shaft (14),
an operation switching mechanism (43) that is provided in a driving force transmission path and switches an operating state thereof depending on the magnitude of a torque acting thereon, the driving force transmission path being a path through which a driving force is transmitted from the output shaft (14) to the pinion (13),
wherein, when a torque of a predetermined magnitude or more acts on the operation switching mechanism (43), the operating state of the operation switching mechanism (43) switches from a linked state in which the driving force transmission path is linked, to an unlinked/released state in which the driving force transmission path is unlinked and released, and after the operating state has switched to the unlinked/released state and when the magnitude of the acting torque drops below the predetermined magnitude, the operating state is capable of returning to the linked state;
wherein
the speed reduction portion (17) includes a first speed reduction portion (17a) and a second speed reduction portion (17b), the first speed reduction portion (17a) being coupled to the input shaft (16, 42) and slowing down and transmitting the rotational driving force that is input to the input shaft (16, 42), and the second speed reduction portion (17b) being coupled to the output portion (18), further slowing down and transmitting the rotational driving force transmitted from the first speed reduction portion (17a), and outputting the rotational driving force to the output portion (18), and
at least part of the operation switching mechanism (19, 43, 50) is provided in at least one of the output shaft (14), the input shaft (16, 42), and the first speed reduction portion (17a) that are in the driving force transmission path,wherein the operation switching mechanism (43) provided in the input shaft (42) includes:
a first tubular portion (44) that has a tubular shape and is fixed to an outer circumference of the output shaft (14);
a second tubular portion (45) that is disposed concentrically with the first tubular portion (44) with an inner circumference of the second tubular portion (45) being in rotatably sliding contact with an outer circumference of the first tubular portion (44);
a second engagement pin (46) that is slidably disposed in the second tubular portion (45), has a front end portion that can protrude through the second tubular portion (45) toward the first tubular portion (44) so that the second engagement pin (46) is engaged with a second recessed portion (44a) that is formed in the outer circumference of the first tubular portion(44), and restricts rotation of the first tubular portion (44) relative to the second tubular portion (45); and
a second spring member (47) that is installed in the second tubular portion (45) and biases the second engagement pin (46) in a direction to cause the second engagement pin (46) to protrude through the second tubular portion (45) toward the first tubular portion (44), and
the operation switching mechanism (43) is configured such that, when a torque of a predetermined magnitude or more acts between the first tubular portion (44) and the second tubular portion (45), the second engagement pin (46) is disengaged from the second recessed portion (44a), and the operating state switches from the linked state in which the rotation of the first tubular portion (44) relative to the second tubular portion (45) is restricted, to the unlinked/released state in which the first tubular portion (44) rotates relative to the second tubular portion (45).

5. A driving device (3) for a wind turbine, comprising:
a pinion (13) that meshes with a ring gear (107) that is fixed to a first structure in a movable portion of a wind turbine (101);
an electric motor (12) that is fixed to a second structure that is rotatably disposed on the first structure in the movable portion;
an output shaft (14) that outputs a rotational driving force of the electric motor (12);
an input shaft (16) that is coupled to the output shaft (14) and receives input of a rotational driving force from the electric motor (12);
an output portion (18) to which the pinion (13) is fixed;
a speed reduction portion (17) that is coupled to the input shaft (16, 42) and the output portion (18), slows down and transmits the rotational driving force that is input to the input shaft (16), and outputs the rotational driving force to the output portion (18); and
a braking mechanism (15) for stopping the output shaft (14),
the driving device (3) for a wind turbine further comprising:
an operation switching mechanism (50) that is provided in a driving force transmission path and switches an operating state thereof depending on the magnitude of a torque acting thereon, the driving force transmission path being a path through which a driving force is transmitted from the output shaft (14) to the pinion (13),
wherein, when a torque of a predetermined magnitude or more acts on the operation switching mechanism (50), the operating state of the operation switching mechanism (509) switches from a linked state in which the driving force transmission path is linked, to an unlinked/released state in which the driving force transmission path is unlinked and released, and after the operating state has switched to the unlinked/released state and when the magnitude of the acting torque drops below the predetermined magnitude, the operating state is capable of returning to the linked state;
wherein the speed reduction portion (17) includes a first speed reduction portion (17a) and a second speed reduction portion (17b), the first speed reduction portion (17a) being coupled to the input shaft (16, 42) and slowing down and transmitting the rotational driving force that is input to the input shaft (16,42) and the second speed reduction portion (17b) being coupled to the output portion (18), further slowing down and transmitting the rotational driving force transmitted from the first speed reduction portion (17a), and outputting the rotational driving force to the output portion (18); and
at least part of the operation switching mechanism (50) is provided in at least one of the output shaft (14), the input shaft (16, 42), and the first speed reduction portion (17a) that are in the driving force transmission path;
wherein the first speed reduction portion (17a) is provided as a planet gear speed reducer that includes a sun gear (26), a plurality of planet gears (27) that mesh with the sun gear (26) and revolve around the sun gear (26) while rotating on axes of the planet gears (27), and a planet carrier (28) that supports the planet gears (27) such that the planet gears (27) are able to freely rotate on the axes of the planet gears (27) and to freely revolve around the sun gear (26), and
at least part of the operation switching mechanism (50) is provided in the first speed reduction portion (17a);
wherein the operation switching mechanism (50) includes a planetary ring gear (29, 51) and a holding unit (52), the planetary ring gear (51) being provided in the first speed reduction portion (17a) and disposed around the planet gears (27) so as to mesh with the planet gears (27), and the holding unit (52) rotatably holding the planetary ring gear (29, 51) in a state in which axial movement of the planetary ring gear (51) relative to a body (11) is restricted, the body (11) housing the input shaft (16) and the speed reduction portion (17), and when a torque of a predetermined magnitude or more acts between the holding unit (30, 52) and the planetary ring gear (51), the operating state switches from the linked state in which the rotation of the planetary ring gear (51) relative to the holding unit (52) is restricted, to the unlinked/released state in which the planetary ring gear (51) rotates relative to the holding unit (52); wherein
the holding unit (52) includes:
a third engagement pin (53) that has a front end portion that can protrude toward the planetary ring gear (51) from the input shaft (16) side to the output portion (18) side in a direction parallel to an axial direction of the planetary ring gear (51) so that the third engagement pin (53) is engaged with a third recessed portion (51a) that is formed in an end face of the planetary ring gear (51); and
a biasing mechanism (54) that is installed in the body (11) and biases the third engagement pin (53) in a direction to cause the third engagement pin (53) to protrude toward the planetary ring gear (51).

6. The driving device (3) for a wind turbine according to claim 5, wherein
a plurality of the third engagement pins (53) are provided, and
the biasing mechanism (54) includes:
a retaining plate (55) that holds the third engagement pins (53); and
a single third spring member (56) that causes the retaining plate (55) to protrude toward the planetary ring gear (51) so that the third engagement pins (53) are biased in a direction to cause the third engagement pins (53) to protrude toward the planetary ring gear (51).

7. The driving device (3) for a wind turbine according to claim 6, wherein the third spring member (56) is a ring-shaped spring member that is formed rising upward in a dish shape.

## Patentansprüche

1. Antriebsvorrichtung (1) für eine Windturbine, umfassend:
ein Ritzel (13), das mit einen Zahnkranz (107) verzahnt ist, der an einer ersten Struktur in einem beweglichen Abschnitt einer Windturbine (101) befestigt ist;
einen Elektromotor (12), der an einer zweiten Struktur befestigt ist, die drehbar an der ersten Struktur in dem beweglichen Abschnitt angeordnet ist;
eine Abtriebswelle (14), die eine Drehantriebskraft des Elektromotors (12) abgibt;
eine Antriebswelle (16, 42), die mit der Abtriebswelle (14) gekoppelt ist und die Leistung einer Drehantriebskraft von dem Elektromotor (12) empfängt;
einen Abtriebsabschnitt (18), an dem das Ritzel (13) befestigt ist;
einen Drehzahlreduzierungsabschnitt (17), der mit der Antriebswelle (16) und dem Abtriebsabschnitt (18) gekoppelt ist, die an die Antriebswelle (16, 42) angelegte Drehantriebskraft verlangsamt und überträgt, und die Drehantriebskraft an den Abtriebsabschnitt (18) abgibt; und
einen Bremsmechanismus (15) zum Stoppen der Abtriebswelle (14),
wobei die Antriebsvorrichtung (1, 2, 3) für eine Windturbine des Weiteren Folgendes umfasst:
einen Betriebsumschaltmechanismus (19, 43, 50), der in einem Antriebskraftübertragungspfad angeordnet ist und seinen Betriebszustand in Abhängigkeit von der Größenordnung eines auf ihn wirkenden Drehmoments umschaltet, wobei der Antriebskraftübertragungspfad ein Pfad ist, durch den eine Antriebskraft von der Abtriebswelle (14) zu dem Ritzel (13) übertragen wird, wobei, wenn ein Drehmoment von mindestens einer zuvor festgelegten Größenordnung auf den Betriebsumschaltmechanismus (19, 43, 50) wirkt, der Betriebszustand des Betriebsumschaltmechanismus (19, 43, 50) von einem verbundenen Zustand, in dem der Antriebskraftübertragungspfad verbunden ist, zu einem nicht-verbundenen/gelösten Zustand, in dem der Antriebskraftübertragungspfad nicht-verbunden und gelöst ist, umschaltet, und nachdem der Betriebszustand zu dem nicht-verbundenen/gelösten Zustand umgeschaltet wurde, und wenn die Größenordnung des einwirkenden Drehmoments unter die zuvor festgelegte Größenordnung sinkt, der Betriebszustand wieder in den verbundenen Zustand zurückkehren kann;
wobei der Drehzahlreduzierungsabschnitt (17) einen ersten Drehzahlreduzierungsabschnitt (17a) und einen zweiten Drehzahlreduzierungsabschnitt (17b) umfasst, wobei der erste Drehzahlreduzierungsabschnitt (17a) mit der Antriebswelle (16, 42) gekoppelt ist und die an die Antriebswelle (16, 42) angelegte Drehantriebskraft verlangsamt und überträgt, und wobei der zweite Drehzahlreduzierungsabschnitt (17b) mit dem Abtriebsabschnitt (18) gekoppelt ist und die von dem ersten Drehzahlreduzierungsabschnitt (17a) übertragene Drehantriebskraft weiter verlangsamt und überträgt und die Drehantriebskraft zu dem Abtriebsabschnitt (18) abgibt; und
mindestens ein Teil des Betriebsumschaltmechanismus (19, 43, 50) in mindestens einem der Abtriebswelle (14), der Antriebswelle (16, 42) und dem ersten Drehzahlreduzierungsabschnitt (17a), die in dem Antriebskraftübertragungspfad liegen, angeordnet ist; wobei der erste Drehzahlreduzierungsabschnitt (17a) als ein Planetengetriebe-Drehzahlreduzierer ausgebildet ist, der Folgendes umfasst: ein Sonnenrad (26), mehrere Planetenräder (27), die mit dem Sonnenrad (26) verzahnt sind und sich um das Sonnenrad (26) drehen, während sie sich auf Achsen der Planetenräder (27) drehen, und einen Planetenträger (28), der die Planetenräder (27) so stützt, dass sich die Planetenräder (27) frei auf den Achsen der Planetenräder (27) drehen können und sich frei um das Sonnenrad (26) drehen können, und
mindestens ein Teil des Betriebsumschaltmechanismus (1, 3) in dem ersten Drehzahlreduzierungsabschnitt (17a) angeordnet ist;
wobei der Betriebsumschaltmechanismus (19, 50) einen Planetenzahnkranz (29, 51) und eine Halteeinheit (30, 52) umfasst, wobei der Planetenzahnkranz (29, 51) in dem ersten Drehzahlreduzierungsabschnitt (17a) angeordnet ist und so um die Planetenräder (27) herum angeordnet ist, dass er mit den Planetenrädern (27) verzahnt ist, und die Halteeinheit (30, 52) den Planetenzahnkranz (29) drehbar in einem Zustand hält, in dem eine axiale Bewegung des Planetenzahnkranzes (29, 51) relativ zu einem Körper (11) eingeschränkt ist, wobei in dem Körper (11) die Antriebswelle (16) und der Drehzahlreduzierungsabschnitt (17) aufgenommen sind, und
wenn ein Drehmoment von mindestens einer zuvor festgelegten Größenordnung zwischen der Halteeinheit (30, 52) und dem Planetenzahnkranz (29, 51) wirkt, der Betriebszustand von dem verbundenen Zustand, in dem die Rotation des Planetenzahnkranzes (29, 51) relativ zu der Halteeinheit (30, 52) eingeschränkt ist, in den unverbundenen/gelösten Zustand, in dem sich der Planetenzahnkranz (29, 51) relativ zu der Halteeinheit (30, 52) dreht, umschaltet;
wobei die Halteeinheit (30) Folgendes umfasst:
ein Halteringelement (31), das an dem Körper (11) befestigt ist, eine Ringform hat und den Planetenzahnkranz (29) entlang eines Außenumfangs des Planetenzahnkranzes hält;
einen ersten Eingriffnahmestift (32), der gleitend in dem Halteringelement (31) angeordnet ist und einen Vorderendabschnitt hat, der durch das Halteringelement (31) in Richtung des Planetenzahnkranzes (29) so hervorstehen kann, dass der erste Eingriffnahmestift (32) mit einem ersten ausgesparten Abschnitt (29a) in Eingriff ist, der in dem Außenumfang des Planetenzahnkranzes (29) ausgebildet ist; und
ein erstes Federelement (33), das in dem Körper (11) und/oder in dem Halteringelement (31) gelagert ist und den ersten Eingriffnahmestift (32) in eine Richtung vorspannt, um den ersten Eingriffnahmestift (32) zu veranlassen, durch das Halteringelement (31) in Richtung des Planetenzahnkranzes (29) hervorzustehen.

2. Antriebsvorrichtung (1) für eine Windturbine nach Anspruch 1, des Weiteren umfassend:
einen Verschiebungssensor (34), der eine Verschiebung des ersten Eingriffnahmestifts (32) relativ zu dem Halteringelement (31) detektiert; und
eine erste Steuereinheit (20), die, wenn der Verschiebungssensor (34) detektiert, dass der erste Eingriffnahmestift (32) zu einer Position bewegt wurde, in welcher der erste Eingriffnahmestift (32) aus dem Eingriff mit dem ersten ausgesparten Abschnitt (29a) gelöst ist, den Bremsmechanismus (15) so steuert, dass der Bremsmechanismus (15) die Operation des Stoppens der Abtriebswelle (14) abbricht, oder den Elektromotor (12) so steuert, dass eine Abtriebsdrehmoment des Elektromotors (12) verringert wird.

3. Antriebsvorrichtung (1) für eine Windturbine nach Anspruch 1, des Weiteren umfassend:
eine zweite Steuereinheit (20), die, nachdem der Betriebszustand des Betriebsumschaltmechanismus (19) in den unverbundenen/gelösten Zustand umgeschaltet wurde, das Antreiben des Elektromotors (12) so steuert, dass der Planetenzahnkranz (29) zu einer Position gedreht wird, in welcher der erste Eingriffnahmestift (32), der durch das erste Federelement (33) vorgespannt wird, mit dem ersten ausgesparten Abschnitt (29a) in Eingriff gebracht ist.

4. Antriebsvorrichtung (2) für eine Windturbine, umfassend:
ein Ritzel (13), das mit einen Zahnkranz (107) verzahnt ist, der an einer ersten Struktur in einem beweglichen Abschnitt einer Windturbine (101) befestigt ist;
einen Elektromotor (12), der an einer zweiten Struktur befestigt ist, die drehbar an der ersten Struktur in dem beweglichen Abschnitt angeordnet ist;
eine Abtriebswelle (14), die eine Drehantriebskraft des Elektromotors (12) abgibt;
eine Antriebswelle (42), die mit der Abtriebswelle (14) gekoppelt ist und die Leistung einer Drehantriebskraft von dem Elektromotor (12) empfängt;
einen Abtriebsabschnitt (18), an dem das Ritzel (13) befestigt ist;
einen Drehzahlreduzierungsabschnitt (17), der mit der Antriebswelle (16, 42) und dem Abtriebsabschnitt (18) gekoppelt ist, die an die Antriebswelle (16, 42) angelegte Drehantriebskraft verlangsamt und überträgt, und die Drehantriebskraft an den Abtriebsabschnitt (18) abgibt; und
einen Bremsmechanismus (15) zum Stoppen der Abtriebswelle (14),
einen Betriebsumschaltmechanismus (43), der in einem Antriebskraftübertragungspfad angeordnet ist und seinen Betriebszustand in Abhängigkeit von der Größenordnung eines auf ihn wirkenden Drehmoments umschaltet, wobei der Antriebskraftübertragungspfad ein Pfad ist, durch den eine Antriebskraft von der Abtriebswelle (14) zu dem Ritzel (13) übertragen wird,
wobei, wenn ein Drehmoment von mindestens einer zuvor festgelegten Größenordnung auf den Betriebsumschaltmechanismus (43) wirkt, der Betriebszustand des Betriebsumschaltmechanismus (43) von einem verbundenen Zustand, in dem der Antriebskraftübertragungspfad verbunden ist, zu einem nicht-verbundenen/gelösten Zustand, in dem der Antriebskraftübertragungspfad nicht-verbunden und gelöst ist, umschaltet, und nachdem der Betriebszustand in den unverbundenen/gelösten Zustand umgeschaltet wurde, und wenn die Größenordnung des einwirkenden Drehmoments unter die zuvor festgelegte Größenordnung sinkt, der Betriebszustand in den verbundenen Zustand zurückkehren kann;
wobei
der Drehzahlreduzierungsabschnitt (17) einen ersten Drehzahlreduzierungsabschnitt (17a) und einen zweiten Drehzahlreduzierungsabschnitt (17b) umfasst, wobei der erste Drehzahlreduzierungsabschnitt (17a) mit der Antriebswelle (16, 42) gekoppelt ist und die an die Antriebswelle (16, 42) angelegte Drehantriebskraft verlangsamt und überträgt, und wobei der zweite Drehzahlreduzierungsabschnitt (17b) mit dem Abtriebsabschnitt (18) gekoppelt ist und die von dem ersten Drehzahlreduzierungsabschnitt (17a) übertragene Drehantriebskraft weiter verlangsamt und überträgt und die Drehantriebskraft zu dem Abtriebsabschnitt (18) abgibt, und
mindestens ein Teil des Betriebsumschaltmechanismus (19, 43, 50) in mindestens einem der Abtriebswelle (14), der Antriebswelle (16, 42) und dem ersten Drehzahlreduzierungsabschnitt (17a), die in dem Antriebskraftübertragungspfad liegen, angeordnet ist,
wobei der Betriebsumschaltmechanismus (43), der in der Antriebswelle (42) angeordnet ist, Folgendes umfasst:
einen ersten röhrenförmigen Abschnitt (44), der eine Röhrenform hat und an einem Außenumfang der Abtriebswelle (14) befestigt ist;
einen zweiten röhrenförmigen Abschnitt (45), der konzentrisch zu dem ersten röhrenförmigen Abschnitt (44) angeordnet ist, wobei ein Innenumfang des zweiten röhrenförmigen Abschnitts (45) in einem gleitfähigen Drehkontakt mit einem Außenumfang des ersten röhrenförmigen Abschnitts (44) ist;
einen zweiten Eingriffnahmestift (46), der gleitend in dem zweiten röhrenförmigen Abschnitt (45) angeordnet ist, einen Vorderendabschnitt hat, der durch den zweiten röhrenförmigen Abschnitt (45) in Richtung des ersten röhrenförmigen Abschnitts (44) so hervorstehen kann, dass der zweite Eingriffnahmestift (46) mit einem zweiten ausgesparten Abschnitt (44a) in Eingriff ist, der in dem Außenumfang des ersten röhrenförmigen Abschnitts (44) ausgebildet ist und die Rotation des ersten röhrenförmigen Abschnitts (44) relativ zu dem zweiten röhrenförmigen Abschnitt (45) beschränkt; und
ein zweites Federelement (47), das in dem zweiten röhrenförmigen Abschnitt (45) gelagert ist und den zweiten Eingriffnahmestift (46) in eine Richtung vorspannt, um den zweiten Eingriffnahmestift (46) zu veranlassen, durch den zweiten röhrenförmigen Abschnitt (45) in Richtung des ersten röhrenförmigen Abschnitts (44) hervorzustehen, und
der Betriebsumschaltmechanismus (43) so ausgebildet ist, dass, wenn ein Drehmoment von mindestens einer zuvor festgelegten Größenordnung zwischen dem ersten röhrenförmigen Abschnitt (44) und dem zweiten röhrenförmigen Abschnitt (45) wirkt, der zweite Eingriffnahmestift (46) aus dem Eingriff mit dem zweiten ausgesparten Abschnitt (44a) gelöst wird und der Betriebszustand von dem verbundenen Zustand, in dem die Rotation des ersten röhrenförmigen Abschnitts (44) relativ zu dem zweiten röhrenförmigen Abschnitt (45) eingeschränkt ist, zu dem nicht-verbundenen/gelösten Zustand, in dem sich der erste röhrenförmige Abschnitt (44) relativ zu dem zweiten röhrenförmigen Abschnitt (45) dreht, umschaltet.

5. Antriebsvorrichtung (3) für eine Windturbine, umfassend:
ein Ritzel (13), das mit einen Zahnkranz (107) verzahnt ist, der an einer ersten Struktur in einem beweglichen Abschnitt einer Windturbine (101) befestigt ist;
einen Elektromotor (12), der an einer zweiten Struktur befestigt ist, die drehbar an der ersten Struktur in dem beweglichen Abschnitt angeordnet ist;
eine Abtriebswelle (14), die eine Drehantriebskraft des Elektromotors (12) abgibt;
eine Antriebswelle (16), die mit der Abtriebswelle (14) gekoppelt ist und die Leistung einer Drehantriebskraft von dem Elektromotor (12) empfängt;
einen Abtriebsabschnitt (18), an dem das Ritzel (13) befestigt ist;
einen Drehzahlreduzierungsabschnitt (17), der mit der Antriebswelle (16, 42) und dem Abtriebsabschnitt (18) gekoppelt ist, die an die Antriebswelle (16) angelegte Drehantriebskraft verlangsamt und überträgt und die Drehantriebskraft an den Abtriebsabschnitt (18) abgibt; und
einen Bremsmechanismus (15) zum Stoppen der Abtriebswelle (14),
wobei die Antriebsvorrichtung (3) für eine Windturbine des Weiteren Folgendes umfasst:
einen Betriebsumschaltmechanismus (50), der in einem Antriebskraftübertragungspfad angeordnet ist und seinen Betriebszustand in Abhängigkeit von der Größenordnung eines auf ihn wirkenden Drehmoments umschaltet, wobei der Antriebskraftübertragungspfad ein Pfad ist, durch den eine Antriebskraft von der Abtriebswelle (14) zu dem Ritzel (13) übertragen wird,
wobei, wenn ein Drehmoment von mindestens einer zuvor festgelegten Größenordnung auf den Betriebsumschaltmechanismus (50) wirkt, der Betriebszustand des Betriebsumschaltmechanismus (509) von einem verbundenen Zustand, in dem der Antriebskraftübertragungspfad verbunden ist, zu einem nicht-verbundenen/gelösten Zustand, in dem der Antriebskraftübertragungspfad nicht-verbunden und gelöst ist, umschaltet, und nachdem der Betriebszustand in den unverbundenen/gelösten Zustand umgeschaltet wurde, und wenn die Größenordnung des einwirkenden Drehmoments unter die zuvor festgelegte Größenordnung sinkt, der Betriebszustand wieder in den verbundenen Zustand zurückkehren kann;
wobei der Drehzahlreduzierungsabschnitt (17) einen ersten Drehzahlreduzierungsabschnitt (17a) und einen zweiten Drehzahlreduzierungsabschnitt (17b) umfasst, wobei der erste Drehzahlreduzierungsabschnitt (17a) mit der Antriebswelle (16, 42) gekoppelt ist und die an die Antriebswelle (16, 42) angelegte Drehantriebskraft verlangsamt und überträgt, und wobei der zweite Drehzahlreduzierungsabschnitt (17b) mit dem Abtriebsabschnitt (18) gekoppelt ist und die von dem ersten Drehzahlreduzierungsabschnitt (17a) übertragene Drehantriebskraft weiter verlangsamt und überträgt und die Drehantriebskraft zu dem Abtriebsabschnitt (18) abgibt; und
mindestens ein Teil des Betriebsumschaltmechanismus (50) in mindestens einem der Abtriebswelle (14), der Antriebswelle (16, 42) und dem ersten Drehzahlreduzierungsabschnitt (17a), die in dem Antriebskraftübertragungspfad liegen, angeordnet ist; wobei der erste Drehzahlreduzierungsabschnitt (17a) als ein Planetengetriebe-Drehzahlreduzierer ausgebildet ist, der Folgendes umfasst: ein Sonnenrad (26), mehrere Planetenräder (27), die mit dem Sonnenrad (26) verzahnt sind und sich um das Sonnenrad (26) drehen, während sie sich auf Achsen der Planetenräder (27) drehen, und einen Planetenträger (28), der die Planetenräder (27) so stützt, dass sich die Planetenräder (27) frei auf den Achsen der Planetenräder (27) drehen können und sich frei um das Sonnenrad (26) drehen können, und
mindestens ein Teil des Betriebsumschaltmechanismus (50) in dem ersten Drehzahlreduzierungsabschnitt (17a) angeordnet ist;
wobei der Betriebsumschaltmechanismus (50) einen Planetenzahnkranz (29, 51) und eine Halteeinheit (52) umfasst, wobei der Planetenzahnkranz (51) in dem ersten Drehzahlreduzierungsabschnitt (17a) angeordnet ist und so um die Planetenräder (27) herum angeordnet ist, dass er mit den Planetenrädern (27) verzahnt ist, und die Halteeinheit (52) den Planetenzahnkranz (29, 51) drehbar in einem Zustand hält, in dem eine axiale Bewegung des Planetenzahnkranzes (51) relativ zu einem Körper (11) eingeschränkt ist, wobei in dem Körper (11) die Antriebswelle (16) und der Drehzahlreduzierungsabschnitt (17) aufgenommen sind, und wenn ein Drehmoment von mindestens einer zuvor festgelegten Größenordnung zwischen der Halteeinheit (30, 52) und dem Planetenzahnkranz (51) wirkt, der Betriebszustand von dem verbundenen Zustand, in dem die Rotation des Planetenzahnkranzes (51) relativ zu der Halteeinheit (52) eingeschränkt ist, in den unverbundenen/gelösten Zustand, in dem der Planetenzahnkranz (51) sich relativ zu der Halteeinheit (52) dreht, umschaltet; wobei die Halteeinheit (52) Folgendes umfasst:
einen dritten Eingriffnahmestift (53), der einen Vorderendabschnitt hat, der in Richtung des Planetenzahnkranzes (51) von der Seite der Antriebswelle (16) zu der Seite des Abtriebsabschnitts (18) in einer Richtung parallel zu einer axialen Richtung des Planetenzahnkranzes (51) so vorstehen kann, dass der dritte Eingriffnahmestift (53) mit einem dritten ausgesparten Abschnitt (51a) in Eingriff ist, der in einer Endfläche des Planetenzahnkranzes (51) ausgebildet ist; und
einen Vorspannmechanismus (54), der in dem Körper (11) gelagert ist und den dritten Eingriffnahmestift (53) in eine Richtung vorspannt, um den dritten Eingriffnahmestift (53) zu veranlassen, in Richtung des Planetenzahnkranzes (51) hervorzustehen.

6. Antriebsvorrichtung (3) für eine Windturbine nach Anspruch 5, wobei
mehrere der dritten Eingriffnahmestifte (53) vorhanden sind, und
der Vorspannmechanismus (54) Folgendes umfasst:
eine Halteplatte (55), welche die dritten Eingriffnahmestifte (53) hält; und
ein einzelnes drittes Federelement (56), das die Halteplatte (55) veranlasst, in Richtung des Planetenzahnkranzes (51) so hervorzustehen, dass die dritten Eingriffnahmestifte (53) in eine Richtung vorgespannt werden, um die dritten Eingriffnahmestifte (53) zu veranlassen, in Richtung des Planetenzahnkranzes (51) hervorzustehen.

7. Antriebsvorrichtung (3) für eine Windturbine nach Anspruch 6, wobei das dritte Federelement (56) ein ringförmiges Federelement ist, das so ausgebildet ist, dass es napfförmig nach oben strebt.

## Revendications

1. Dispositif d'entraînement (1) destiné à une éolienne, comprenant :
un pignon (13) qui engrène avec une couronne (107) qui est fixée à une première structure dans une partie mobile d'éolienne (101) ;
un moteur électrique (12) qui est fixé à une seconde structure qui est disposée sur la première structure dans la partie mobile, de manière à pouvoir tourner ;
un arbre de sortie (14) qui délivre une force d'entraînement en rotation du moteur électrique (12) ;
un arbre d'entrée (16, 42) qui est accouplé à l'arbre de sortie (14) et qui reçoit en entrée une force d'entraînement en rotation provenant du moteur électrique (12) ;
une partie de sortie (18) à laquelle est fixé le pignon (13) ;
une partie de réduction de vitesse (17) qui est accouplée à l'arbre d'entrée (16) et à la partie de sortie (18), ralentit et transmet la force d'entraînement en rotation qui est appliquée à l'arbre d'entrée (16, 42), et délivre la force d'entraînement en rotation à la partie de sortie (18) ; et
un mécanisme de freinage (15) destiné à arrêter l'arbre de sortie (14),
le dispositif d'entraînement (1, 2, 3) destiné à une éolienne comprenant en outré :
un mécanisme de commutation de fonctionnement (19, 43, 50) qui est placé sur un trajet de transmission de force d'entraînement et qui commute un état de fonctionnement de celui-ci en fonction de la grandeur d'un couple agissant sur celui-ci, le trajet de transmission de force d'entraînement étant un trajet par l'intermédiaire duquel une force d'entraînement est transmise de l'arbre de sortie (14) au pignon (13),
dans lequel, lorsqu'un couple supérieur ou égal à une grandeur prédéterminée agit sur le mécanisme de commutation de fonctionnement (19, 43, 50), l'état de fonctionnement du mécanisme de commutation de fonctionnement (19, 43, 50) passe d'un état lié dans lequel le trajet de transmission de force d'entraînement est lié, à un état non lié/libéré dans lequel le trajet de transmission de force d'entraînement est non lié et libéré, et après que l'état de fonctionnement est passé à l'état non lié/libéré et lorsque la grandeur du couple agissant chute au-dessous de la grandeur prédéterminée, l'état de fonctionnement peut retourner à l'état lié ;
dans lequel la partie de réduction de vitesse (17) comporte une première partie de réduction de vitesse (17a) et une seconde partie de réduction de vitesse (17b), la première partie de réduction de vitesse (17a) étant accouplée à l'arbre d'entrée (16, 42) et ralentissant et transmettant la force d'entraînement en rotation qui est appliquée à l'arbre d'entrée (16, 42), et la seconde partie de réduction de vitesse (17b) étant accouplée à la partie de sortie (18), ralentissant davantage et transmettant la force d'entraînement en rotation transmise depuis la première partie de réduction de vitesse (17a), et délivrant la force d'entraînement en rotation à la partie de sortie (18) ; et
au moins une partie du mécanisme de commutation de fonctionnement (19, 43, 50) est placée sur l'arbre de sortie (14) et/ou l'arbre d'entrée (16, 42) et/ou la première partie de réduction de vitesse (17a) qui se trouvent sur le trajet de transmission de force d'entraînement ;
dans lequel la première partie de réduction de vitesse (17a) se présente sous la forme d'un réducteur de vitesse à engrenage planétaire qui comporte un planétaire (26), une pluralité de satellites (27) qui engrènent avec le planétaire (26) et sont en révolution autour du planétaire (26), tout en étant en rotation sur des axes des satellites (27), et un porte-satellites (28) qui supporte les satellites (27), de manière que les satellites (27) soient aptes à être en rotation libre sur les axes des satellites (27) et en révolution libre autour du planétaire (26), et
au moins une partie du mécanisme de commutation de fonctionnement (1, 3) est placée dans la première partie de réduction de vitesse (17a) ;
dans lequel le mécanisme de commutation de fonctionnement (19, 50) comporte une couronne planétaire (29, 51) et une unité de maintien (30, 52), la couronne planétaire (29, 51) étant placée dans la première partie de réduction de vitesse (17a) et disposée autour des satellites (27) de manière à engrener avec les satellites (27), et l'unité de maintien (30, 52) maintenant en rotation la couronne planétaire (29) dans un état dans lequel le mouvement axial de la couronne planétaire (29, 51) par rapport à un corps (11) est limité, le corps (11) logeant l'arbre d'entrée (16) et la partie de réduction de vitesse (17), et
lorsqu'un couple supérieur ou à égal à une grandeur prédéterminée agit entre l'unité de maintien (30, 52) et la couronne planétaire (29, 51), l'état de fonctionnement passe de l'état lié dans lequel la rotation de la couronne planétaire (29, 51) par rapport à l'unité de maintien (30, 52) est limitée, à l'état non lié/libéré dans lequel la couronne planétaire (29, 51) tourne par rapport à l'unité de maintien (30, 52) ;
dans lequel l'unité de maintien (30) comporte :
un élément formant anneau de retenue (31) qui est fixé au corps (11), est de forme annulaire, et maintient la couronne planétaire (29) le long d'une circonférence extérieure de la couronne planétaire ;
une première broche de mise en prise (32) qui est disposée dans l'élément formant anneau de retenue (31) de manière à pouvoir glisser et qui présente une partie d'extrémité avant qui peut faire saillie à travers l'élément formant anneau de retenue (31) vers la couronne planétaire (29), de manière que la première broche de mise en prise (32) entre en prise avec une première partie évidée (29a) qui est ménagée sur la circonférence extérieure de la couronne planétaire (29) ; et
un premier élément formant ressort (33) qui est installé dans le corps (11) et/ou dans l'élément formant anneau de retenue (31) et qui sollicite la première broche de mise en prise (32) dans une direction pour faire que la première broche de mise en prise (32) soit saillante à travers l'élément formant anneau de retenue (31) en direction de la couronne planétaire (29).

2. Dispositif d'entraînement (1) destiné à une éolienne selon la revendication 1, comprenant en outré :
un capteur de déplacement (34) qui détecte un déplacement de la première broche de mise en prise (32) par rapport à l'élément formant anneau de retenue (31) ; et
un premier dispositif de commande (20) qui, lorsque le capteur de déplacement (34) détecte que la première broche de mise en prise (32) s'est déplacée vers une position à laquelle la première broche de mise en prise (32) est désolidarisée de la première partie évidée (29a), commande le mécanisme de freinage (15) de manière que le mécanisme de freinage (15) annule l'opération d'arrêt de l'arbre de sortie (14), ou commande le moteur électrique (12) de manière à réduire un couple de sortie du moteur électrique (12).

3. Dispositif d'entraînement (1) destiné à une éolienne selon la revendication 1, comprenant en outré :
un second dispositif de commande (20) qui, après que l'état de fonctionnement du mécanisme de commutation de fonctionnement (19) est passé à l'état non lié/libéré, commande l'entraînement du moteur électrique (12) de manière que la couronne planétaire (29) soit tournée vers une position à laquelle la première broche de mise en prise (32) qui est sollicitée par le premier élément formant ressort (33) entre en prise avec la première partie évidée (29a).

4. Dispositif d'entraînement (2) destiné à une éolienne, comprenant :
un pignon (13) qui engrène avec une couronne (107) qui est fixée à une première structure dans une partie mobile d'éolienne (101) ;
un moteur électrique (12) qui est fixé à une seconde structure qui est disposée sur la première structure dans la partie mobile, de manière à pouvoir tourner ;
un arbre de sortie (14) qui délivre une force d'entraînement en rotation du moteur électrique (12) ;
un arbre d'entrée (42) qui est accouplé à l'arbre de sortie (14) et qui reçoit en entrée une force d'entraînement en rotation provenant du moteur électrique (12) ;
une partie de sortie (18) à laquelle est fixé le pignon (13) ;
une partie de réduction de vitesse (17) qui est accouplée à l'arbre d'entrée (16, 42) et à la partie de sortie (18), ralentit et transmet la force d'entraînement en rotation qui est appliquée à l'arbre d'entrée (16, 42), et délivre la force d'entraînement en rotation à la partie de sortie (18) ; et
un mécanisme de freinage (15) destiné à arrêter l'arbre de sortie (14),
un mécanisme de commutation de fonctionnement (43) qui est placé sur un trajet de transmission de force d'entraînement et qui commute un état de fonctionnement de celui-ci en fonction de la grandeur d'un couple agissant sur celui-ci, le trajet de transmission de force d'entraînement étant un trajet par l'intermédiaire duquel une force d'entraînement est transmise de l'arbre de sortie (14) au pignon (13),
dans lequel, lorsqu'un couple supérieur ou égal à une grandeur prédéterminée agit sur le mécanisme de commutation de fonctionnement (43), l'état de fonctionnement du mécanisme de commutation de fonctionnement (43) passe d'un état lié dans lequel le trajet de transmission de force d'entraînement est lié, à un état non lié/libéré dans lequel le trajet de transmission de force d'entraînement est non lié et libéré, et après que l'état de fonctionnement est passé à l'état non lié/libéré et lorsque la grandeur du couple agissant chute au-dessous de la grandeur prédéterminée, l'état de fonctionnement peut retourner à l'état lié ;
dans lequel :
la partie de réduction de vitesse (17) comporte une première partie de réduction de vitesse (17a) et une seconde partie de réduction de vitesse (17b), la première partie de réduction de vitesse (17a) étant accouplée à l'arbre d'entrée (16, 42) et ralentissant et transmettant la force d'entraînement en rotation qui est appliquée à l'arbre d'entrée (16, 42), et la seconde partie de réduction de vitesse (17b) étant accouplée à la partie de sortie (18), ralentissant davantage et transmettant la force d'entraînement en rotation transmise depuis la première partie de réduction de vitesse (17a), et
délivrant la force d'entraînement en rotation à la partie de sortie (18), et
au moins une partie du mécanisme de commutation de fonctionnement (19, 43, 50) est placée sur l'arbre de sortie (14) et/ou l'arbre d'entrée (16, 42) et/ou la première partie de réduction de vitesse (17a) qui se trouvent sur le trajet de transmission de force d'entraînement, dans lequel le mécanisme de commutation de fonctionnement (43) placé sur l'arbre d'entrée (42) comporte :
une première partie tubulaire (44) qui est de forme tubulaire et qui est fixée à une circonférence extérieure de l'arbre de sortie (14) ;
une seconde partie tubulaire (45) qui est disposée de manière concentrique à la première partie tubulaire (44), une circonférence intérieure de la seconde partie tubulaire (45) étant en contact glissant en rotation avec une circonférence extérieure de la première partie tubulaire (44) ;
une deuxième broche de mise en prise (46) qui est disposée dans la seconde partie tubulaire (45) de manière à pouvoir glisser, présente une partie d'extrémité avant qui peut faire saillie à travers la seconde partie tubulaire (45) vers la première partie tubulaire (44), de manière que la deuxième broche de mise en prise (46) entre en prise avec une deuxième partie évidée (44a) qui est ménagée sur la circonférence extérieure de la première partie tubulaire (44), et limite la rotation de la première partie tubulaire (44) par rapport à la seconde partie tubulaire (45) ; et
un deuxième élément formant ressort (47) qui est installé dans la seconde partie tubulaire (45) et qui sollicite la deuxième broche de mise en prise (46) dans une direction pour faire que la deuxième broche de mise en prise (46) soit saillante à travers la seconde partie tubulaire (45) en direction de la première partie tubulaire (44), et
le mécanisme de commutation de fonctionnement (43) est conçu de manière que, lorsqu'un couple supérieur ou égal à une grandeur prédéterminée agit entre la première partie tubulaire (44) et la seconde partie tubulaire (45), la deuxième broche de mise en prise (46) est désolidarisée de la deuxième partie évidée (44a) et l'état de fonctionnement passe de l'état lié dans lequel la rotation de la première partie tubulaire (44) par rapport à la seconde partie tubulaire (45) est limitée, à l'état non lié/libéré dans lequel la première partie tubulaire (44) tourne par rapport à la seconde partie tubulaire (45).

5. Dispositif d'entraînement (3) destiné à une éolienne, comprenant :
un pignon (13) qui engrène avec une couronne (107) qui est fixée à une première structure dans une partie mobile d'éolienne (101) ;
un moteur électrique (12) qui est fixé à une seconde structure qui est disposée sur la première structure dans la partie mobile, de manière à pouvoir tourner ;
un arbre de sortie (14) qui délivre une force d'entraînement en rotation du moteur électrique (12) ;
un arbre d'entrée (16) qui est accouplé à l'arbre de sortie (14) et qui reçoit en entrée une force d'entraînement en rotation provenant du moteur électrique (12) ;
une partie de sortie (18) à laquelle est fixé le pignon (13) ;
une partie de réduction de vitesse (17) qui est accouplée à l'arbre d'entrée (16, 42) et à la partie de sortie (18), ralentit et transmet la force d'entraînement en rotation qui est appliquée à l'arbre d'entrée (16), et délivre la force d'entraînement en rotation à la partie de sortie (18) ; et
un mécanisme de freinage (15) destiné à arrêter l'arbre de sortie (14),
le dispositif d'entraînement (3) destiné à une éolienne comprenant en outré :
un mécanisme de commutation de fonctionnement (50) qui est placé sur un trajet de transmission de force d'entraînement et qui commute un état de fonctionnement de celui-ci en fonction de la grandeur d'un couple agissant sur celui-ci, le trajet de transmission de force d'entraînement étant un trajet par l'intermédiaire duquel une force d'entraînement est transmise de l'arbre de sortie (14) au pignon (13),
dans lequel, lorsqu'un couple supérieur ou égal à une grandeur prédéterminée agit sur le mécanisme de commutation de fonctionnement (50), l'état de fonctionnement du mécanisme de commutation de fonctionnement (50) passe d'un état lié dans lequel le trajet de transmission de force d'entraînement est lié, à un état non lié/libéré dans lequel le trajet de transmission de force d'entraînement est non lié et libéré, et après que l'état de fonctionnement est passé à l'état non lié/libéré et lorsque la grandeur du couple agissant chute au-dessous de la grandeur prédéterminée, l'état de fonctionnement peut retourner à l'état lié ;
dans lequel la partie de réduction de vitesse (17) comporte une première partie de réduction de vitesse (17a) et une seconde partie de réduction de vitesse (17b), la première partie de réduction de vitesse (17a) étant accouplée à l'arbre d'entrée (16, 42) et ralentissant et transmettant la force d'entraînement en rotation qui est appliquée à l'arbre d'entrée (16, 42), et la seconde partie de réduction de vitesse (17b) étant accouplée à la partie de sortie (18), ralentissant davantage et transmettant la force d'entraînement en rotation transmise depuis la première partie de réduction de vitesse (17a), et délivrant la force d'entraînement en rotation à la partie de sortie (18) ; et
au moins une partie du mécanisme de commutation de fonctionnement (50) est placée sur l'arbre de sortie (14) et/ou l'arbre d'entrée (16, 42) et/ou la première partie de réduction de vitesse (17a) qui se trouvent sur le trajet de transmission de force d'entraînement ;
dans lequel la première partie de réduction de vitesse (17a) se présente sous la forme d'un réducteur de vitesse à engrenage planétaire qui comporte un planétaire (26), une pluralité de satellites (27) qui engrènent avec le planétaire (26) et sont en révolution autour du planétaire (26), tout en étant en rotation sur des axes des satellites (27), et un porte-satellites (28) qui supporte les satellites (27), de manière que les satellites (27) soient aptes à être en rotation libre sur les axes des satellites (27) et en révolution libre autour du planétaire (26), et
au moins une partie du mécanisme de commutation de fonctionnement (50) est placée dans la première partie de réduction de vitesse (17a) ;
dans lequel le mécanisme de commutation de fonctionnement (50) comporte une couronne planétaire (29, 51) et une unité de maintien (52), la couronne planétaire (51) étant placée dans la première partie de réduction de vitesse (17a) et disposée autour des satellites (27), de manière à engrener avec les satellites (27), et l'unité de maintien (52) maintenant en rotation la couronne planétaire (29, 51) dans un état dans lequel le mouvement axial de la couronne planétaire (51) par rapport à un corps (11) est limité,
le corps (11) logeant l'arbre d'entrée (16) et la partie de réduction de vitesse (17), et lorsqu'un couple supérieur ou à égal à une grandeur prédéterminée agit entre l'unité de maintien (30, 52) et la couronne planétaire (51), l'état de fonctionnement passe de l'état lié dans lequel la rotation de la couronne planétaire (51) par rapport à l'unité de maintien (52) est limitée, à l'état non lié/libéré dans lequel la couronne planétaire (51) tourne par rapport à l'unité de maintien (52) ; dans lequel :
l'unité de maintien (52) comporte :
une troisième broche de mise en prise (53) qui présente une partie d'extrémité avant qui peut faire saillie vers la couronne planétaire (51), du côté arbre d'entrée (16) au côté partie de sortie (18), dans une direction parallèle à une direction axiale de la couronne planétaire (51), de manière que la troisième broche de mise en prise (53) entre en prise avec une troisième partie évidée (51a) qui est ménagée sur une face d'extrémité de la couronne planétaire (51) ; et
un mécanisme de sollicitation (54) qui est installé dans le corps (11) et qui sollicite la troisième broche de mise en prise (53) dans une direction pour faire que la troisième broche de mise en prise (53) soit saillante en direction de la couronne planétaire (51).

6. Dispositif d'entraînement (3) destiné à une éolienne selon la revendication 5, dans lequel :
une pluralité des troisièmes broches de mise en prise (53) est mise en place, et
le mécanisme de sollicitation (54) comporte :
une plaque de retenue (55) qui maintient les troisièmes broches de mise en prise (53) ; et
un unique troisième élément formant ressort (56) qui fait que la plaque de retenue (55) soit saillante en direction de la couronne planétaire (51), de manière que les troisièmes broches de mise en prise (53) soient sollicitées dans une direction pour faire que les troisièmes broches de mise en prise (53) soient saillantes en direction de la couronne planétaire (51).

7. Dispositif d'entraînement (3) destiné à une éolienne selon la revendication 6, dans lequel le troisième élément formant ressort (56) est un élément formant ressort annulaire qui est formé de manière à s'élever vers le haut en une forme de cuvette.
